# EUROPÄISCHE PATENTSCHRIFT

(11) **EP 2 614 928 B1**
(45) Veröffentlichungstag und Bekanntmachung des Hinweises auf die Patenterteilung: **22.07.2015**
(21) Anmeldenummer: 12000219.1
(22) Anmeldetag: 16.01.2012
(51) Int. Cl.: B25B 31/00, B25D 17/00, F16B 13/08

(54) **Eintreibwerkzeug, Verfahren zum Setzen eines unter Verwendung eines Eintreibwerkzeugs durch Einschlagen verankerbaren Befestigungselementes sowie Verfahren zur Montage eines Eintreibwerkzeugs**
Driving tool, method for setting a fixing element that can be anchored by being driven in using a driving tool and method for installing a driving tool
Outil pour enfoncer des organes de fixation, procédé de pose d'un élément de fixation pouvant être ancré par enfoncement en utilisant un outil pour enfoncer des organes de fixation ainsi que procédé de montage d'un outil pour enfoncer des organes de fixation

(43) Veröffentlichungstag der Anmeldung: 17.07.2013
(73) Patentinhaber: UIP GmbH & Co. KG, 63814 Mainaschaff (DE)
(72) Erfinder: Göttlich, Harald, 30900 Wedemark (DE)
(74) Vertreter: Westphal, Mussgnug & Partner Patentanwälte mbB

(56) Entgegenhaltungen:
- EP-A2- 1 211 029
- DE-A1- 2 016 272
- DE-U1- 29 518 109
- JP-A- 2004 176 303

## Beschreibung

Die Erfindung betrifft ein Eintreibwerkzeug für ein mittels eines Bohrhammers oder dergleichen in eine Bohrung eines Verankerungsgrundes durch Einschlagen verankerbares Befestigungselement, vorzugsweise eines verankerbaren selbstschneidenden Hinterschnittankers, wobei das Befestigungselement eine Spreizhülse sowie einen darin angeordneten Spreizkörper aufweist und wobei das Befestigungselement, insbesondere die Spreizhülse, in dem - in Setzrichtung gesehen - hinteren Bereich ein Gewinde, vorzugsweise ein Innengewinde, aufweist, nach dem Oberbegriff des Patentanspruchs 1. Die Erfindung betrifft ausserdem ein Verfahren zum Setzen eines vorgenannten Befestigungselements mittels eines solchen Eintreibwerkzeugs und eines Bohrhammers oder dergleichen. Schliesslich betrifft die Erfindung noch ein Verfahren zur Montage bzw. zum Zusammenbau eines solchen Eintreibwerkzeugs.

Unter einem Bohrhammer oder dergleichen werden im Sinne der Erfindung neben dem Bohrhammer auch solche Werkzeugmaschinen verstanden, die - wie ein Bohrhammer - eine Schlag-und eine Drehfunktion mit veränderbarer Drehrichtung haben. Zu diesen Werkzeugmaschinen gehören beispielsweise auch Schlagbohrmaschinen.

Im Bereich der Bautechnik stellt sich häufig die Aufgabe, Lasten in Bauteile wie Beton oder Stahlbeton einzuleiten. Hierzu sind diverse Befestigungsmittel bekannt, die je nach ihrem Mechanismus und der Art der Kraftübertragung unterteilt werden. In der Schwerlastbefestigung gibt es grundsätzlich zwei Arten von Befestigungsmitteln in Form von mechanischen Ankern. Die einen Anker werden Expansionsanker genannt und halten aufgrund eines Reibschlusses im Ankergrund. Die anderen Anker halten aufgrund eines Formschlusses im Ankergrund und werden Hinterschnittanker genannt.

Vorgenannte Befestigungsmittel weisen üblicherweise eine Spreizhülse auf, die durch Längsschlitze, welche - in Setzrichtung gesehen - im vorderen Bereich der Spreizhülse angeordnet sind, in Spreizzungen unterteilt ist, und die - in Setzrichtung gesehen - im hinteren Bereich ein Innengewinde oder einen Bolzen aufweisen. Ausserdem ist ein Spreizkörper vorgesehen, der - in Setzrichtung gesehen - im vorderen Bereich der Spreizhülse innerhalb der Spreizhülse angeordnet ist. Zur Verankerung eines solchen Befestigungsmittels wird üblicherweise ein Einschlagbolzens in die Spreizhülse eingeführt und dieser in Setzrichtung derart eingeschlagen, dass der Spreizkörper durch das - in Setzrichtung gesehen - vordere Ende des Einschlagbolzens in Setzrichtung nach vorne, also tiefer in die Spreizhülse gedrückt wird, derart, dass die Spreizzungen zur Verankerung im Ankergrund aufspreizen. Bei einem selbstschneidenden Hinterschnittanker schneiden dabei die auf den Spreizzungen vorhandenen Schneidkanten in den Verankerungsgrund ein.

Als Stand der Technik wird EP 1 211 029 A2 genannt.

Das Setzen derartiger Befestigungsmittel ist derzeit ausserordentlich aufwendig.

Ausgehend von diesem Stand der Technik liegt der Erfindung die Aufgabe zugrunde, ein verbessertes Eintreibwerkzeug und ein Verfahren zum Setzen eines mittels eines Bohrhammers oder dergleichen in eine Bohrung eines Verankerungsgrundes durch Einschlagen verankerbaren Befestigungselements, vorzugsweise eines verankerbaren selbstschneidenden Hinterschnittankers, bereitzustellen sowie ein Verfahren zur Montage eines solchen Eintreibwerkzeugs anzugeben. Ein derartiges mit einem Bohrhammer oder dergleichen verwendbares Eintreibwerkzeug soll das Setzen vorgenannter Befestigungsmittel erheblich vereinfachen. Die Einhaltung einer präzisen Bohrlochtiefe und die Verwendung eines Drehmomentschlüssels mit vorgegebenem Drehmoment sowie der Einsatz kostspieliger Kragenbohrer oder dergleichen zum Erzeugen einer Hinterschnitt-Aushöhlung sollen überflüssig werden. Eine weitere Aufgabe der Erfindung besteht darin, ein Eintreibwerkzeug und ein Verfahren zum Setzen eines mittels eines Bohrhammers oder dergleichen in eine Bohrung eines Verankerungsgrundes durch Einschlagen verankerbaren Befestigungselements, vorzugsweise eines verankerbaren selbstschneidenden Hinterschnittankers, hinsichtlich der zu erfüllenden Funktion, des Einsatzbereichs, der Durchführbarkeit, der Verringerung der Verletzungsgefahr und der zuverlässigen Reproduzierbarkeit anzugeben. Insgesamt soll auch ein kostengünstigeres, insbesondere schnelleres Verfahren zum Setzen des vorgenannten Befestigungsmittels, insbesondere eines selbstschneidenden Hinterschnittankers, bereitgestellt werden. Aufgabe der vorliegenden Erfindung ist auch, ein Eintreibwerkzeug und ein Verfahren bereitzustellen, mit dem insbesondere ein selbstschneidender Hinterschnittanker ohne grossen Aufwand vorzugsweise oberflächennah im Verankerungsgrund verankerbar ist, wobei der Hinterschnittanker auch in sicherheitsrelevanten Bereichen einsetzbar sein soll und Verankerungen mit ausreichend hohen Haltewerten ermöglicht. Ferner liegt der Erfindung die Aufgabe zugrunde, ein Verfahren zum sehr schnellen Setzen des Befestigungselements, insbesondere des selbstschneidenden Hinterschnittankers, im vorzugsweise oberflächennahen Ankergrund bereitzustellen, derart, dass direkt nach dem Setzen, also ohne Wartezeit, ein Bauteil oder dergleichen am Hinterschnittanker befestigt werden kann.

Diese Aufgabe wird durch ein Eintreibwerkzeug für ein mittels eines Bohrhammers oder dergleichen in eine Bohrung eines Verankerungsgrundes durch Einschlagen verankerbares Befestigungselement, insbesondere zum Setzen eines selbstschneidenden Hinterschnittankers, umfassend sämtliche Merkmale des Anspruchs 1 und durch ein Verfahren zum Setzen eines mittels eines Bohrhammers oder dergleichen und mittels eines solchen Eintreibwerkzeugs in eine Bohrung eines Verankerungsgrundes durch Einschlagen verankerbaren Befestigungselementes, insbesondere eines selbstschneidenden Hinterschnittankers, mit den Merkmalen des Anspruchs 15 gelöst. Schliesslich wird die Aufgabe auch durch ein entsprechend einfach zu montieren Eintreibwerkzeug und entsprechend durch ein Verfahren zur Montage eines solchen Eintreibwerkzeugs mit den Merkmalen des Anspruchs 19 gelöst. Vorteilhafte Ausgestaltungen und Weiterbildungen der Erfindung ergeben sich aus den jeweiligen Unteransprüchen.

Als das in eine Bohrung eines Verankerungsgrundes durch Einschlagen verankerbare Befestigungselement ist erfindungsgemäss ein Befestigungselement mit einer Spreizhülse sowie einem darin angeordneten Spreizkörper vorgesehen, wobei das Befestigungselement in seinem - in Setzrichtung gesehen - hinteren Bereich ein Gewinde, vorzugsweise ein Innengewinde, aufweist. Vorteilhaft kann es sich bei dem Befestigungselement um einen Hinterschnittanker handeln, der eine Spreizhülse umfasst, die durch Längsschlitze, welche - in Setzrichtung gesehen - im vorderen Bereich der Spreizhülse angeordnet sind, in Spreizzungen unterteilt ist, und die - in Setzrichtung gesehen - im hinteren Bereich ein Innengewinde aufweist. Ein solcher Hinterschnittanker umfasst ausserdem einen Spreizkörper, der - in Setzrichtung gesehen - im vorderen Bereich der Spreizhülse innerhalb der Spreizhülse angeordnet ist.

Erfindungsgemäss umfasst das Eintreibwerkzeug zumindest folgende Teile:
a) eine Hülse, die in ihrem - in Setzrichtung gesehen - vorderen Bereich ein Gewinde aufweist, das mit dem Gewinde des Befestigungselements zum Halten und Positionieren desselben verschraubbar ist, wobei die Hülse wenigstens ein Aufsetzmittel aufweist, mit dem das Eintreibwerkzeug auf dem Verankerungsgrund aufsetzbar ist, derart, dass das Befestigungselement in vorgegebener Position zumindest teilweise, vorzugsweise vollständig, innerhalb der Bohrung angeordnet ist,
b) einen Einschlagbolzen, welcher innerhalb der Hülse axial bewegbar angeordnet ist und mit der Stirnseite seines - in Setzrichtung gesehen - vorderen Endes auf den Spreizkörper bringbar ist, wenn das Befestigungselement mit dem Eintreibwerkzeug verschraubt ist, wobei das - in Setzrichtung gesehen - hintere Ende des Einschlagbolzens ausserhalb der Hülse endet und derart ausgebildet ist, dass es von der Aufnahme des Bohrhammers aufnehmbar ist, um den Einschlagbolzen beim Vorschieben des Bohrhammers in Setzrichtung mit Schlagimpulsen zu versehen, die letztendlich auf den Spreizkörper übertragbar sind,
c) wenigstens ein Begrenzungsmittel zur Begrenzung der in Setzrichtung maximalen Axialbewegung des Einschlagbolzens beim Vorschieben des Bohrhammers in Setzrichtung,
d) ein Kupplungselement, das das Drehmoment des mit der Aufnahme des Bohrhammers verbundenen - in Setzrichtung gesehen - links drehenden Einschlagbolzens beim Zurückziehen des Bohrhammers auf die Hülse überträgt, so dass die Schraubverbindung zwischen Eintreibwerkzeug und drehfest eingeschlagenem Befestigungselement getrennt wird, wobei das Kupplungselement beim Vorschieben des Bohrhammers in Setzrichtung kein Drehmoment des mit der Aufnahme des Bohrhammers verbundenen Einschlagbolzens überträgt.

Ein solches Eintreibwerkzeug ermöglicht im Zusammenspiel mit einem Bohrhammer oder dergleichen eine einfache Montage des vorgenannten Befestigungselements, insbesondere eines selbstschneidenden Hinterschnittankers, mit garantiert ausgeprägtem Hinterschnitt, insbesondere in sicherheitsrelevanten Bereichen, wobei Verankerungen mit ausreichend hohen Haltewerten erreicht werden. Vorteilhaft ist hierbei, dass keine präzise Bohrlochtiefe erforderlich ist. Auch ein Drehmomentwerkzeug mit vorgeschriebenem Drehmoment ist nicht erforderlich. Das Setzen des Befestigungsmittels ist weniger zeit- und mithin weniger kostenintensiv.

Das - in Setzrichtung gesehen - hintere Ende des Einschlagbolzens, welches ausserhalb der Hülse endet, ist vorzugsweise als SDS-Plus Aufnahme ausgebildet. SDS-Plus bezeichnet hierbei ein Bohrerschaft-System für schlagende und drehende Elektrowerkzeuge wie Bohrmaschinen und Bohrhämmer. Bei diesem Einstecksystem ist der Bohrerschaft mit speziellen Nuten versehen, die eine bessere Kraftübertragung gewährleisten. Im Gegensatz zu anderen Einstecksystemen ermöglicht der SDS-Plus-Bohrerschaft einen werkzeuglosen und schnellen Wechsel von Bohrern. Dies hat den Vorteil, dass zunächst mittels eines Bohrers eine oder mehrere Bohrungen im Verankerungsgrund hergestellt werden, anschliessend der Bohrer gegen das erfindungsgemässe Eintreibwerkzeug ausgetauscht wird, und schliesslich die Befestigungselemente mit dem ohnehin vorhandenen Bohrhammer oder dergleichen gesetzt werden.

Vorteilhaft ist weiterhin, dass mit dem erfindungsgemässen Eintreibwerkzeug das mit dem Eintreibwerkzeug verschraubte Befestigungselement auch bei der Überkopfmontage problemlos setzbar ist.

Zudem ist auch durch die Verschraubung zwischen Befestigungselement und Eintreibwerkzeug sichergestellt, dass die Schlagimpulse zentrische in das Befestigungselement bzw. auf den Spreizkörper eingeleitet werden. Ein Verkanten oder Beschädigen des Befestigungselements wird zudem vermieden. Ein zügiges Setzen des Befestigungselements wird erreicht.

Ausserdem wird neben der relativen Zeitersparnis beim Setzen durch einen Bediener auch dessen Verletzungsrisiko reduziert. Die herkömmliche Verwendung von Hammer und Einschlagbolzen kann vorteilhaft entfallen.

Als weiterer Vorteil ist zu nennen, dass der Bohrhammer oder dergleichen am üblicherweise schon für das Herstellen der Bohrungen Verwendung findet und daher bereits am Einsatzort vorhanden ist. Der Bohrer ist also lediglich durch das Eintreibwerkzeug zu ersetzen.

Der Einschlagbolzen ist dabei erfindungsgemäß mehrteilig ausgebildet und umfasst zumindest zwei Einschlagbolzen, nämlich einen ersten Einschlagbolzen, welcher innerhalb der Hülse axial bewegbar angeordnet ist und mit der Stirnseite seines - in Setzrichtung gesehen - vorderen Endes auf den Spreizkörper bringbar ist, wenn das Befestigungselement mit dem Eintreibwerkzeug verschraubt ist, wobei das - in Setzrichtung gesehen - hintere Ende des ersten Einschlagbolzens innerhalb der Hülse endet, und einen zweiten Einschlagbolzen, welcher innerhalb der Hülse axial bewegbar angeordnet ist und mit der Stirnseite seines - in Setzrichtung gesehen - vorderen Endes auf die Stirnseite des - in Setzrichtung gesehen - hinteren Endes des ersten Einschlagbolzens bringbar ist, wobei das - in Setzrichtung gesehen - hintere Ende des zweiten Einschlagbolzens ausserhalb der Hülse endet und derart ausgebildet ist, dass es von der Aufnahme des Bohrhammers aufnehmbar ist, um den zweiten Einschlagbolzen beim Vorschieben des Bohrhammers in Setzrichtung mit Schlagimpulsen zu versehen, die auf den ersten Einschlagbolzen und letztendlich auf den Spreizkörper übertragbar sind

Es kann von Vorteil sein, wenn dass das Begrenzungsmittel zur Begrenzung der maximalen Axialbewegung des Einschlagbolzens bzw. des ersten und/oder zweiten Einschlagbolzens durch eine Aufweitung am Einschlagbolzen gebildet ist, die auf eine an der Hülse vorgesehene Verengung trifft.

Es kann zweckmässig sein, wenn der mit der Aufnahme des Bohrhammers verbindbare Einschlagbolzen ausserhalb der Hülse eine Aufweitung, vorzugsweise eine radiale Verdickung, aufweist, die zur Begrenzung der maximalen Axialbewegung dieses Einschlagbolzens auf eine - in Setzrichtung gesehen - am hinteren Ende der Hülse vorgesehene Verengung trifft.

Es kann vorteilhaft sein, wenn diese Verengung durch ein mit dem - in Setzrichtung gesehen - hinteren Ende der Hülse verbindbares, vorzugsweise verschraubbares Haltemittel, vorzugsweise nach Art eines Verschlusses gebildet ist, welches eine axiale Bohrung aufweist, durch die der - in Sitzrichtung gesehen - vor der Aufweitung angeordnete Teil bzw. Schaft des Einschlagbolzens führbar ist.

Es kann vorteilhaft sein, wenn der mit der Aufnahme des Bohrhammers verbindbare Einschlagbolzen vorzugsweise an dem - in Setzrichtung gesehen - vorderen Ende eine Aufweitung, insbesondere eine radiale Verdickung bzw. einen zylinderförmigen Bolzenfuss, aufweist.

Es kann von Vorteil sein, wenn die Aufweitung als ein separates Teil ausgebildet ist, das mit dem übrigen Teil, insbesondere mit dem Schaft, des mit der Aufnahme des Bohrhammers verbindbaren Einschlagbolzens verbindbar, vorzugsweise verschraubbar, ist.

Es kann zweckmässig sein, wenn der erste Einschlagbolzen innerhalb der Hülse vorzugsweise an seinem - in Setzrichtung gesehen - hinteren Ende eine Aufweitung, insbesondere eine radiale Verdickung bzw. einen zylinderförmigen Kopf, aufweist, welche zur Begrenzung der maximalen Axialbewegung dieses Einschlagbolzens auf eine - in Setzrichtung gesehen - am vorderen Ende der Hülse vorgesehene Verengung trifft.

Es kann zweckmässig sein, wenn eine bzw. die - in Setzrichtung gesehen - am vorderen Ende der Hülse vorgesehene Verengung als in der Hülse nach innen gerichteter Vorsprung ausgebildet ist, der vorzugsweise radial umläuft und eine axiale Öffnung oder Bohrung aufweist, durch die der - in Sitzrichtung gesehen - vor einer bzw. vor der Aufweitung angeordnete Teil oder Schaft des Einschlagbolzens führbar ist.

Es kann vorteilhaft sein, wenn das Aufsetzmittel als ein aussen an der Hülse radial umlaufender Kragen ausgebildet ist, der einen grösseren Aussendurchmesser aufweist als die Bohrung und mit der Unterseite auf dem Verankerungsgrund bzw. der Oberkante der Bohrung aufsetzbar ist.

Es kann von Vorteil sein, wenn das Kupplungselement ein zwischen der Hülse und dem mit der Aufnahme des Bohrhammers verbindbaren Einschlagbolzen angeordnetes Zwischenelement, vorzugsweise eine innerhalb der Hülse angeordnete Kupplungshülse, ist, welches mit der Hülse zur Übertragung des Drehmoments in Wirkverbindung steht, vorzugsweise permanent, und derart ausgebildet ist, dass es beim Zurückziehen des Bohrhammers mit einer entsprechenden Ausbildung an dem mit der Aufnahme des Bohrhammers verbundenen links laufenden Einschlagbolzen zusammenwirkt, so dass das Drehmoment dieses Einschlagbolzens auf das Zwischenelement und weiter auf die Hülse übertragen wird.

Es kann vorteilhaft sein, wenn das Kupplungselement in der Hülse auf einem nach innen gerichteten, vorzugsweise radial umlaufenden Vorsprung positionierbar ist und über wenigstens ein Haltemittel wenigstens gegen axiales Verschieben fixierbar ist.

Es kann vorteilhaft sein, wenn das Kupplungselement und die Hülse über Formschluss, vorzugsweise über ein in Axialrichtung verlaufendes Nut-Feder-System, zusammenwirken, derart, dass ein Drehmoment des Kupplungselements auf die Hülse übertragen wird.

Es kann von Vorteil sein, wenn das Kupplungselement bzw. die Kupplungshülse an dem - in Setzrichtung gesehen - vorderen Ende einen einseitig abgerundeten Vorsprung aufweist, der mit einem entsprechenden einseitig abgerundeten Vorsprung an dem mit der Aufnahme des Bohrhammers verbindbaren Einschlagbolzen zusammenwirkt, wobei die einseitig abgerundeten Vorsprünge derart ausgebildet sind, dass diese nur beim Zurückziehen des Bohrhammers und Linksdrehung des Einschlagbolzens zusammenwirken und das Drehmoment des Einschlagbolzens auf das Kupplungselement übertragen wird.

Es kann zweckmässig sein, wenn das Befestigungselement ein Expansionsanker oder vorzugsweise ein Hinterschnittanker, ganz bevorzugt ein selbstschneidender Hinterschnittanker, ist.

Die Erfindung betrifft ausserdem ein Verfahren zum Setzen eines mittels eines Bohrhammers oder dergleichen und mittels eines Eintreibwerkzeugs nach einem der Ansprüche 1 bis 14 in eine Bohrung eines Verankerungsgrundes durch Einschlagen verankerbaren Befestigungselements, wobei das Befestigungselement eine Spreizhülse sowie einen darin angeordneten Spreizkörper aufweist und wobei das Befestigungselement in seinem - in Setzrichtung gesehen - hinteren Bereich ein Gewinde, vorzugsweise ein Innengewinde aufweist, mit folgenden Verfahrensschritten:
a) Verschrauben des Befestigungselements mit der Hülse, die in ihrem - in Setzrichtung gesehen - vorderen Bereich ein zum Gewinde des Befestigungselements passendes Gewinde, vorzugsweise ein Aussengewinde, aufweist,
b) Verbinden des - in Setzrichtung gesehen - hinteren und ausserhalb der Hülse befindlichen Endes des Einschlagbolzens mit der Aufnahme des Bohrhammers,
c) Einbringen des mit der Hülse verschraubten Befestigungselements in die Bohrung des Verankerungsgrund bis das Aufsetzmittel der Hülse auf den Verankerungsgrund aufsetzt, so dass sich das Befestigungselement in vorgegebener Position innerhalb der Bohrung befindet,
d) Vorschieben des Bohrhammers bei gleichzeitiger Betätigung der Schlagfunktion des Bohrhammers, wodurch die Schlagimpulse über den axial in Setzrichtung verschiebbaren Einschlagbolzen letztendlich auf den Spreizkörper übertragen werden, so dass der Spreizkörper durch das - in Setzrichtung gesehen - vordere Ende des Einschlagbolzens in Setzrichtung nach vorne, also tiefer in die Spreizhülse gedrückt wird, derart, dass deren Spreizzungen zur Verankerung im Verankerungsgrund aufgespreizt werden,
e) Zurückziehen des Bohrhammers, sobald das Vorschieben des Bohrhammers aufgrund des vorgesehenen Begrenzungsmittels nicht weiter möglich ist, wobei Drehrichtung des mit der Aufnahme des Bohrhammers verbundenen Einschlagbolzens am Bohrhammer auf links geschaltet wird, wobei über ein Kupplungselement das Drehmoment des dann links laufenden Einschlagbolzens beim Zurückziehen des Bohrhammers auf die Hülse übertragen wird, so dass die Schraubverbindung zwischen Eintreibwerkzeug und eingeschlagenen bzw. verankerten Befestigungselement getrennt wird.

Ein solches Verfahren ermöglicht eine einfache Montage eines vorgenannten Befestigungselements, insbesondere eines selbstschneidenden Hinterschnittankers mit garantiert ausgeprägtem Hinterschnitt, insbesondere in sicherheitsrelevanten Bereichen, wobei Verankerungen mit ausreichend hohen Haltewerten erreicht werden. Vorteilhaft ist hierbei, dass keine präzise Bohrlochtiefe erforderlich ist. Auch ein Drehmomentwerkzeug mit vorgeschriebenem Drehmoment ist nicht erforderlich. Das Setzen des Befestigungselements, insbesondere Hinterschnittankers, ist weniger zeit- und mithin weniger kostenintensiv. Das Verletzungsrisiko wird reduziert. Ein Verkanten oder Beschädigen des Befestigungselements wird vermieden.

Beim Vorschieben des Bohrhammers in Setzrichtung ist es im Übrigen unerheblich, ob neben der notwendigerweise eingeschalteten Schlagfunktion zusätzlich noch eine Drehfunktion des Bohrhammers oder dergleichen aktiviert ist.

Beim Zurückziehen des Bohrhammers oder dergleichen entgegen der Setzrichtung ist es jedenfalls wichtig, dass die Drehrichtung "links" aktiviert ist.

Es kann vorteilhaft sein, wenn das Befestigungselement, vorzugsweise ein Hinterschnittanker, oberflächennah verankert wird, derart, dass das - in Setzrichtung gesehen - hintere Ende der Spreizhülse im Wesentlichen mit der Oberkante der Bohrung abschliesst.

Es kann von Vorteil sein, wenn das verankerte Befestigungselement nach dem Entfernen bzw. Abschrauben des Eintreibwerkzeugs zur weiteren Verwendung, vorzugsweise zur Befestigung von Bauteilen, zur Verfügung steht, wobei entsprechende Befestigungsmittel, vorzugsweise zur Befestigung der Bauteile, in das Befestigungselement bzw. in die Spreizhülse eingeschraubt werden.

Es kann zweckmässig sein, wenn dass das mit dem Bohrhammer oder dergleichen verbundene Eintreibwerkzeug nach dem Entfernen vom eingeschlagenen Befestigungselement mit einem neuen Befestigungselement versehen wird, so dass ein neuer Zyklus zum Setzen des Befestigungselements erfolgen kann.

Die Erfindung betrifft schliesslich auch ein Verfahren zur Montage bzw. zum Zusammenbau eines Eintreibwerkzeugs, insbesondere nach einem der Ansprüche 1 bis 14, mit folgenden Verfahrensschritten:
a) Bereitstellen eines ersten Einschlagbolzens, der an seinem - in Setzrichtung gesehen - hinteren Ende eine Aufweitung aufweist,
b) Einführen des ersten Einschlagbolzens mit seinem - in Setzrichtung gesehen - vor der Aufweitung liegenden Teil bzw. Schaft voran in das - in Setzrichtung gesehen - hintere Ende einer Hülse, wobei die Aufweitung dieses Einschlagbolzens auf eine - in Setzrichtung gesehen - im vorderen Bereich der Hülse vorgesehene Verengung mit axialer Bohrung trifft, durch welche der - in Sitzrichtung gesehen - vor der Aufweitung liegende Teil bzw. Schaft des Einschlagbolzens zumindest teilweise aus der Hülse geführt wird bzw. führbar ist,
c) Bereitstellen eines zweiten Einschlagbolzens, dessen - in Setzrichtung gesehen - hinteres Ende derart ausgebildet ist, dass es von der Aufnahme eines Bohrhammers oder dergleichen aufnehmbar ist, wobei der zweite Einschlagbolzen zudem eine Aufweitung aufweist, die nach dem Zusammenbau des Eintreibwerkzeugs ausserhalb der Hülse angeordnet ist,
d) Bereitstellen eines mit dem - in Setzrichtung gesehen - hinteren Ende der Hülse verbindbaren Haltemittels, das eine axiale Bohrung aufweist,
e) Aufschieben des Haltemittels auf den zweiten Einschlagbolzen von der - in Setzrichtung gesehen - vorderen Seite des zweiten Einschlagbolzens her, wobei der - in Setzrichtung gesehen - vor der Aufweitung angeordnete Teil bzw. Schaft des Einschlagbolzens durch die axiale Bohrung des Haltemittels geführt wird und das Haltemittel maximal bis zur Aufweitung aufgeschoben werden kann,
f) Bereitstellen einer Kupplungshülse, die nach dem Zusammenbau des Eintreibwerkzeugs innerhalb der Hülse und zwar zwischen der Hülse und dem mit der Aufnahme des Bohrhammers verbindbaren zweiten Einschlagbolzen angeordnet ist,
g) Aufschieben der Kupplungshülse auf den zweiten Einschlagbolzen von der - in Setzrichtung gesehen - vorderen Seite des zweiten Einschlagbolzens her, wobei der - in Setzrichtung gesehen - vor der Aufweitung angeordnete Teil bzw. Schaft des Einschlagbolzens durch die Kupplungshülse geführt wird und die Kupplungshülse maximal bis zum Haltemittel aufgeschoben werden kann,
h) Verbinden, vorzugsweise Verschrauben einer Aufweitung in Form eines zylinderförmigen Fusses mit dem - in Setzrichtung gesehen - vorderen Ende des zweiten Einschlagbolzens i) Zusammenführen der mit dem ersten Einschlagbolzen versehenen Hülse mit dem zweiten Einschlagbolzen, der das Haltemittel und die Kupplungshülse aufweist, derart, dass der zweite Einschlagbolzen mit seinem - in Setzrichtung gesehen - vorderen Ende voran in die Hülse eingeführt wird, bis die Kupplungshülse auf einem nach innen gerichteten, radial umlaufenden Vorsprung der Hülse positioniert wird und das Haltemittel mit der Hülse verbunden wird, um die Kupplungshülse gegen axiales Verschieben zu fixieren.

Ein solches Eintreibwerkzeug ermöglicht vorteilhaft das halbautomatisierte Setzen vorgenannter Befestigungselemente.

Es kann zweckmässig sein, wenn die Länge des Einschlagbolzens derart gewählt ist, dass der Spreizköper um eine vorgegebene Tiefe in die Spreizhülse gedrückt wird, um die Spreizzungen auseinanderzuspreizen, um einen garantierten Hinterschnitt zu erzeugen.

Es kann zweckmässig sein, wenn der Schaft des Einschlagbolzens gewindelos ausgebildet ist.

Es kann vorteilhaft sein, wenn die Länge der Spreizhülse 10 mm bis 120 mm, vorzugsweise 30 mm bis 60 mm, beträgt.

Es kann von Vorteil sein, wenn der Durchmesser der Spreizhülse 6 mm bis 30 mm, vorzugsweise 12 mm bis 20 mm, beträgt.

Eine vorteilhafte Ausgestaltung der Erfindung sieht vor, dass der Spreizkörper aus Kunststoff oder Metall, vorzugsweise aus Stahl, oder einem Verbundwerkstoff besteht.

Es kann von Vorteil sein, wenn die Spreizzungen auf der Aussenseite ihrer freien Enden wenigstens eine, vorzugsweise mehrere hintereinander, besonders bevorzugt drei, noch bevorzugter zwei hintereinander angeordnete Schneidkanten aufweisen.

Eine Weiterbildung der Erfindung sieht vor, dass der Hinterschnittanker in Beton- und Stahlbetonbauteile, bevorzugt in Wände, besonders bevorzugt in Mauerwerk oder ganz besonders bevorzugt in Decken, setzbar ist.

Nachfolgend wird die Erfindung anhand eines Ausführungsbeispiels erläutert, das in der Zeichnung dargestellt ist. In dieser zeigen:
Fig. 1 einen selbstschneidenden Hinterschnittanker a) in perspektivischer Ansicht, b) in Seitenansicht, c) in Längsschnittansicht entlang der Schnittlinie A-A, d) in Draufsicht in Setzrichtung und e) in Draufsicht entgegen der Setzrichtung,
Fig. 2 einen Spreizkörper a) in perspektivischer Ansicht, b) in Seitenansicht, c) in Draufsicht in Setzrichtung und d) in Draufsicht entgegen der Setzrichtung,
Fig. 3 eine Hülse des Eintreibwerkzeugs a) in perspektivischer Ansicht, b) in Seitenansicht, c) in Längsschnittansicht entlang der Schnittlinie A-A, d) in Draufsicht in Setzrichtung, e) in Draufsicht entgegen der Setzrichtung und f) in Querschnittansicht entlang der Schnittlinie B-B,
Fig. 4 einen ersten Einschlagbolzen a) in perspektivischer Ansicht, b) in Seitenansicht, c) in Draufsicht in Setzrichtung und e) in Draufsicht entgegen der Setzrichtung,
Fig. 5 einen zweiten Einschlagbolzen a) in perspektivischer Ansicht, b) in Seitenansicht, c) in Längsschnittansicht entlang der Schnittlinie A-A, d) in Draufsicht in Setzrichtung und e) in Draufsicht entgegen der Setzrichtung,
Fig. 6 ein Halte- und Begrenzungsmittel a) in perspektivischer Ansicht, b) in Seitenansicht und c) in Längsschnittansicht entlang der Schnittlinie C-C,
Fig. 7 eine Kupplungshülse a) in perspektivischer Ansicht, b) in Seitenansicht, c) in Längsschnittansicht entlang der Schnittlinie A-A, d) in Draufsicht in Setzrichtung und e) in Draufsicht entgegen der Setzrichtung,
Fig. 8 : einen Bolzenfuss a) in perspektivischer Ansicht, b) in Seitenansicht, c) in Längsschnittansicht entlang der Schnittlinie B-B, d) in Draufsicht in Setzrichtung und e) in Draufsicht entgegen der Setzrichtung,
Fig. 9 einen Eintreibwerkzeug mit Befestigungselement a) in Seitenansicht mit partiell aufgeschnittener Hülse und b) in Längsschnittansicht entlang der Schnittlinie A-A, und
Fig. 10 im perspektivischer Schnittdarstellung ein Eintreibwerkzeug beim Setzen eines Befestigungselements in verschiedenen Verfahrenschritten 1), 2), 3) und 4).

Vorteilhafte Ausgestaltungen und Weiterbildungen der Erfindung können sich auch aus den nachfolgenden Figurenbeschreibungen ergeben. Dabei können auch einzelne Merkmale für sich eine vorteilhafte Ausgestaltung oder Weiterbildung der Erfindung darstellen. Werden in den Figuren gleiche Bezugsziffern verwendet, so werden damit gleiche Teile bezeichnet.

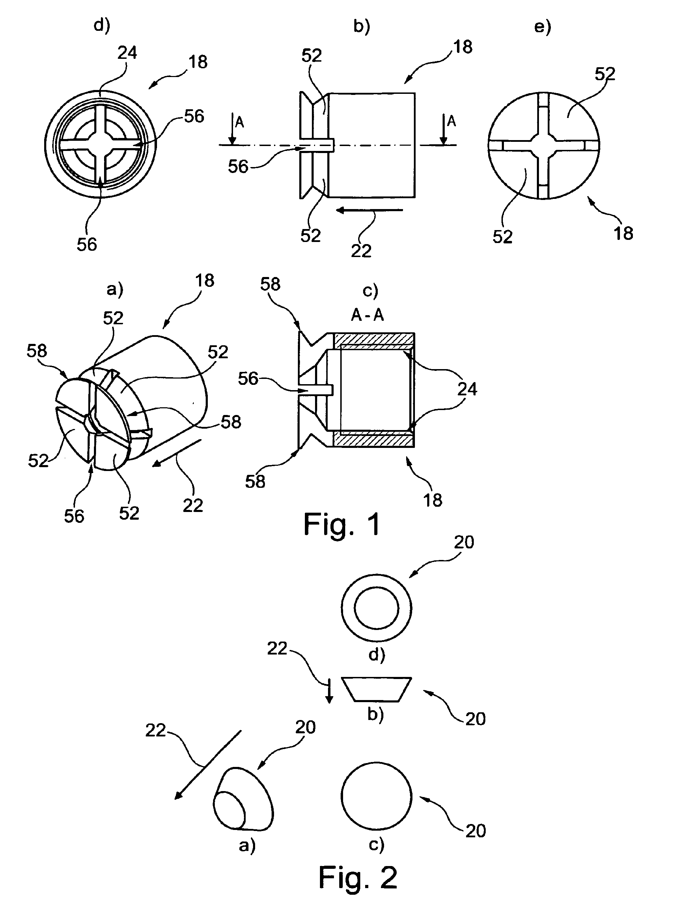

In Fig. 1 ist die Spreizhülse 18 des erfindungsgemässen Befestigungselements 16 in den oben genannten Ansichten dargestellt. In Fig. 2 ist der Spreizkörper 20 des erfindungsgemässen Befestigungselements 16 in den oben genannten Ansichten dargestellt. Spreizhülse 18 und Spreizkörper 20 bilden zusammen das Befestigungselement 16.

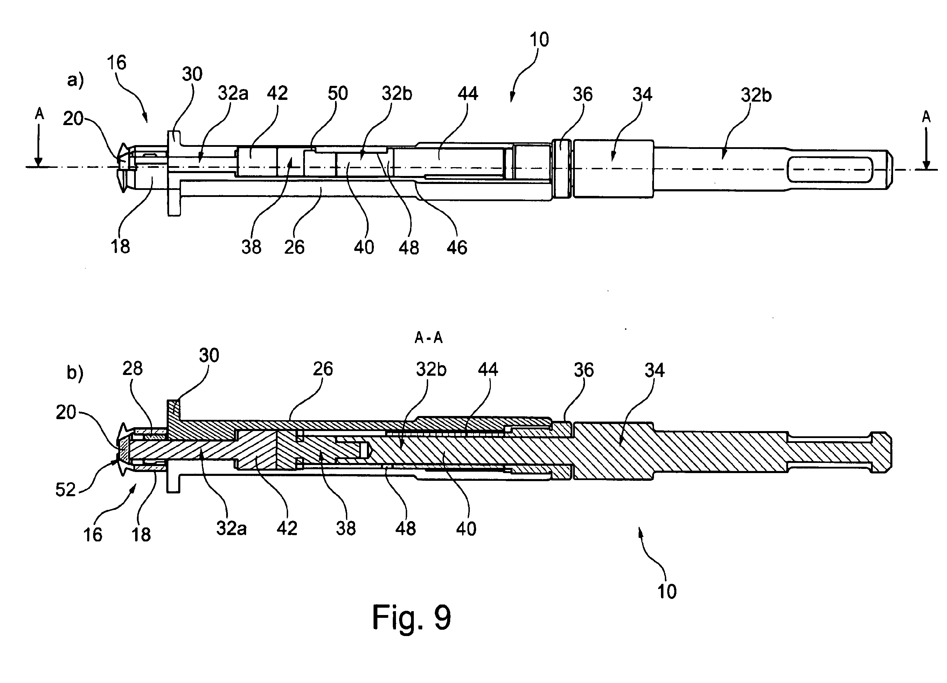

Das Befestigungselement 16 ist vorliegend ein Spreizanker in Form eines selbstschneidenden Hinterschnittankers. Dieser besteht aus der in Fig. 1 dargestellten Spreizhülse 18 und dem in Fig. 2 dargestellten Spreizkörper 20. Die Spreizhülse 18 ist durch Längsschlitze 56, welche im - in Setzrichtung 22 gesehen - vorderen Bereich der Spreizhülse 18 angeordnet sind, in Spreizzungen 52 unterteilt. Die Spreizhülse 18 weist im - in Setzrichtung 22 gesehen -hinteren Bereich ein Innengewinde 24 auf. Der in Fig. 2 dargestellte Spreizkörper 20 ist vorliegend in Form eines konisch sich in Setzrichtung 22 verjüngenden Kegelstumpfes ausgebildet und wird im - in Setzrichtung 22 gesehen - vorderen Bereich der Spreizhülse 18 innerhalb der Spreizhülse 18 angeordnet. Diese Anordnung ist deutlich in Fig. 9 zu erkennen.

Die Spreizhülse 18 wird im Verankerungsgrund dadurch verankert, dass der Spreizkörper 20 in Setzrichtung 22 nach vorne gedrückt wird, so wobei sich die Spreizhülse 18 aufspreizt. Der Spreizkörper 20 besteht vorzugsweise aus Stahl. Die Spreizzungen 52 weisen auf der Aussenseite ihrer freien Enden wenigstens eine Schneidkante 58 auf und sind derart ausgebildet, dass diese 52 beim Hineindrücken des Spreizkörpers 20 in die vorzugsweise aus Metall bestehende Spreizhülse 18 aufgespreizt werden und bei weiterem Hineindrücken des Spreizkörpers 20 entsprechend der Konizität des Spreizkörpers 20 so weit aufschwenken, dass die Schneidkanten 58 in die hier nicht dargestellte Wandung der Bohrung 12 im Verankerungsgrund 14 einschneiden und in diesem Bereich dann einen formschlüssige Verbindung, vorliegend also einen Hinterschnitt, in der Bohrung 12 bilden.

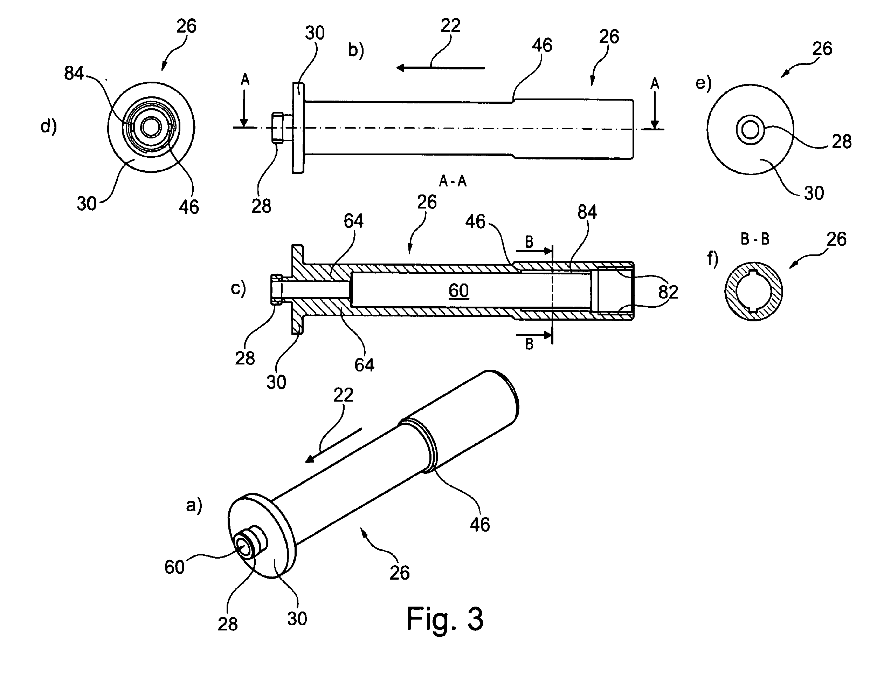

In Fig. 3 ist die Hülse 26 des erfindungsgemässen Eintreibwerkzeugs 10 in den oben genannten Ansichten dargestellt.

Die erfindungsgemäss vorgesehene Hülse 26 ist vorwiegend zylindrisch ausgebildet und weist über ihre Länge unterschiedliche Aussen- und Innendurchmesser auf. In ihrem - in Setzrichtung 22 gesehen - vorderen Bereich weist die Hülse 26 ein Aussengewinde 28 auf, das mit dem oben bereits beschriebenen Innengewinde 24 der in Fig. 1 dargestellten Spreizhülse 18 verschraubbar ist. Entsprechend ist der Aussendurchmesser in diesem Bereich der Hülse 26 dem Innendurchmesser der Spreizhülse 18 angepasst.

Die Spreizhülse 18 kann entsprechend auf die Hülse 26 aufgeschraubt werden, so dass das Befestigungselement 16 von der Hülse 26 gehalten und mittels dieser Hülse 26 in eine Bohrung 12 eines Verankerungsgrundes 14 eingeführt bzw. in dieser 12 positioniert werden kann. Dazu weist die Hülse 26 des Eintreibwerkzeugs 10 wenigstens ein Aufsetzmittel 30 in Form eines aussen radial oder hexagonal umlaufender Kragen 30 auf, der entsprechend einen grösseren Aussendurchmesser aufweist als die Bohrung 12 bzw. als die Spreizhülse 18 und der mit seiner Unterseite auf dem Verankerungsgrund 14 bzw. der Oberkante der Bohrung 12 bzw. Bohrkante 54 aufsetzbar ist. Wenn dabei der Kragen 30 vollflächig auf der im Wesentlichen ebenen Oberfläche des Verankerungsgrundes 14 aufgesetzt ist, ist auch das Befestigungselement 16 in exakt vorgegebener und nicht verkanteter Position innerhalb der Bohrung 12 angeordnet.

Das Befestigungsmittel 16 bzw. die Spreizhülse 18 können bei Verwendung ein und derselben Hülse 26 vorteilhaft in ihren Ausführungen, insbesondere in ihren Längen und Aussendurchmessern sowie in den Ausgestaltungen ihrer Spreizzungen 52 und deren Anzahl, variieren. Wichtig ist nur, dass der mit dem Innengewinde versehene Innendurchmesser der Spreizhülse 18 bei Verwendung ein und derselben Hülse 26 gleich bleibt.

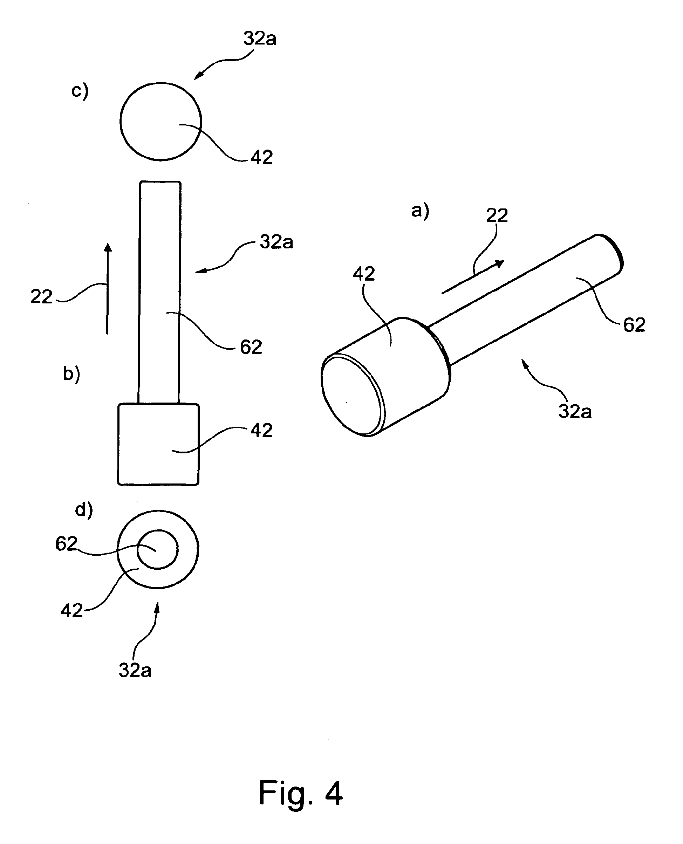

Die Hülse 26 ist an ihren Stirnseiten offen und entsprechend über ihre Länge mir eine axialen Bohrung 60 zur zumindest teilweisen Aufnahme der in den Fig. 4 bis 8 dargestellten Bauteile 32a, 32b mit 38, 36 und 40 versehen.

Die Hülse 26 dient zunächst zur Aufnahme eines ersten Einschlagbolzens 32a, der in Fig. 4 dargestellt ist. Der erste Einschlagbolzen 32 a ist durch einen gewindelosen Schaft 62 gebildet, der an seinem - in Setzrichtung 22 gesehen - hinteren Ende eine Aufweitung 42 in Form eines zylinderförmigen Kopfes aufweist. Dieser erste Einschlagbolzen 32a wird mit dem einen geringen Durchmesser aufweisenden Schaft 62 voran in die Hülse 26 geführt, und zwar von dem - in Setzrichtung 22 gesehen - hinteren Ende der Hülse 26 her. Damit der erste Einschlagbolzen 32a nicht - in Setzrichtung 22 gesehen - vorne aus der Hülse 26 heraus fällt, weist diese 26 im - in Setzrichtung 22 gesehen - vorderen Bereich einen radial umlaufenden und nach innen gerichteten Vorsprung, also quasi eine Verengung 64 auf, durch die nur noch der Schaft 62 des ersten Einschlagbolzen führbar ist.

Dadurch wird der erste Einschlagbolzen 32a nicht nur vor einem Herausfallen aus der Hülse 26 geschützt, sondern zudem in Setzrichtung 22 in seiner axialen Bewegung begrenzt. Es wird deutlich, dass u. a. über die Länge des Bolzenkopfes 42 des ersten Einschlagbolzens 32a der maximal in Setzrichtung zurücklegbare Weg bzw. Hub des ersten Einschlagbolzens 32a vorgebbar ist. Dies und/oder die vorgegebene Länge des Bolzenschaftes 62 des ersten Einschlagbolzen 32a geben auch vor, wie weit der Spreizköper 20 innerhalb der Spreizhülse 18 in Setzrichtung geschlagen bzw. geschoben wird, da der erste Einschlagbolzen 32a mit der Stirnseite seines - in Setzrichtung 22 gesehen - vorderen Endes auf den Spreizkörper 20 bringbar ist, wenn das Befestigungselement 16 bzw. die Spreizhülse 18 mit dem Eintreibwerkzeug 10 bzw. der Hülse 26 verschraubt ist. Wird der erste Einschlagbolzen 32a mit Schlagimpulsen beaufschlagt, werden diese in Setzrichtung 22 auf den Spreizkörper 20 übertragen, der dann entsprechend in Setzrichtung 22 verschoben wird.

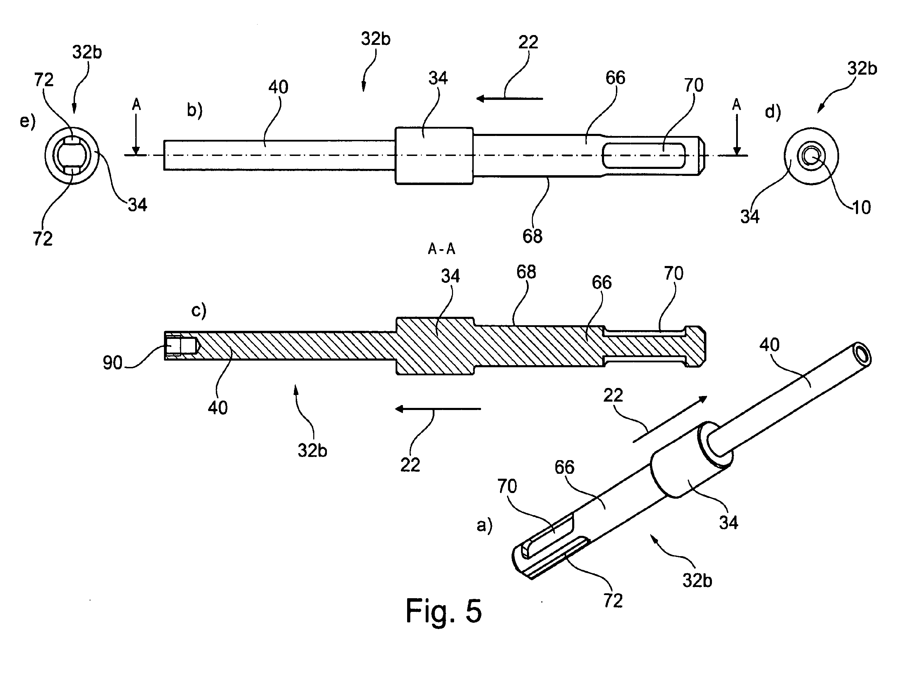

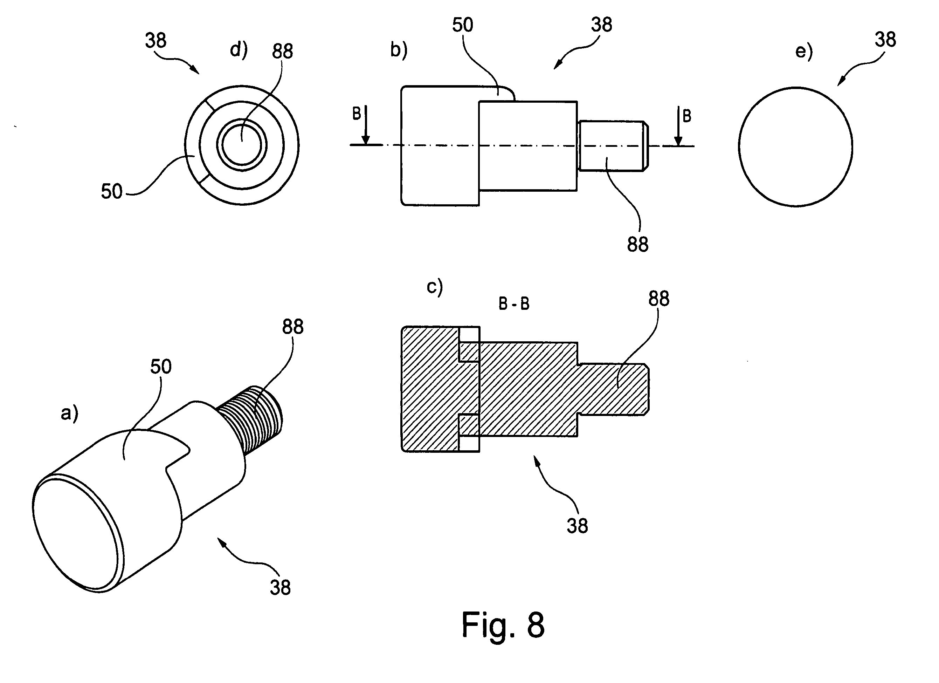

Die Schlagimpulse erhält der erste Einschlagbolzen 32a von dem in Fig. 5 in den oben genannten Ansichten dargestellten zweiten Einschlagbolzen 32 b, wobei zu diesem Einschlagbolzen 32b auch das in Fig. 8 in den oben genannten Ansichten dargestellte Teil 38 gehört.

Der zweite Einschlagbolzen 32b ist axial bewegbar zumindest teilweise innerhalb der Hülse 26 angeordnet. Zur Übertragung von Schlagimpulsen ist der zweite Einschlagbolzen 32b mit der Stirnseite seines - in Setzrichtung 22 gesehen - vorderen Endes, das vorliegend von dem in Fig. 8 dargestellte zylinderförmigen Teil 38 gebildet ist, auf die Stirnseite des - in Setzrichtung 22 gesehen - hinteren Endes des ersten Einschlagbolzens 32a bringbar.

Das - in Setzrichtung 22 gesehen - hintere Ende des zweiten Einschlagbolzens 32b endet ausserhalb der Hülse 26 und ist vorliegend derart ausgebildet, dass es von der Aufnahme eines hier nicht dargestellten Bohrhammers aufnehmbar ist, um den zweiten Einschlagbolzen 32b beim Vorschieben des hier nicht dargestellten Bohrhammers bei Betätigung der Schlagfunktion des Bohrhammers in Setzrichtung 22 mit Schlagimpulsen zu versetzen, die auf den ersten Einschlagbolzen 32a und letztendlich auf den Spreizkörper 20 übertragen werden.

Zu diesem Zweck weist der zweite Einschlagbolzen 32b einen - in Setzrichtung 22 gesehen - hinteren Einsteckschaft 66 auf, welcher in das Spannfutter des hier nicht dargestellten Bohrhammers oder dergleichen drehfest einspannbar ist.

Der Einsteckschaft 66 des zweiten Einschlagbolzens 32b weist an seinem - in Setzrichtung 22 gesehen - hinteren Ende einen Einspannbereich 68 zum Einspannen in das Spannfutter des Bohrhammers oder dergleichen auf, welcher in an sich bekannter Weise zwei längsovale Verriegelungsaussparungen 70 und zwei zum rückwärtigen Ende hin offene Drehmitnahmenuten 72 aufweist, wobei jeweils eine Drehmitnahmenut 72 zu den Verriegelungsaussparungen 70 um 90[deg.] am Einsteckschaft 66 angeordnet ist. Diese Konstellation des Einspannbereichs 68 entspricht einem SDS-plus - Einspannsystem handelsüblicher für Bohrhämmer vorgesehener Bohrer.

Der mit der Aufnahme des hier nicht dargestellten Bohrhammers oder dergleichen verbindbare zweite Einschlagbolzen 32b weist in einem nach dem Zusammenbau der Eintreibwerkzeugs 10 ausserhalb der Hülse 26 verbleibenden Bereich eine Aufweitung 34 in Form einer radialen zylinderförmigen Verdickung auf, die zur Begrenzung der in Setzrichtung 22 maximalen Axialbewegung des zweiten Einschlagbolzens 32b auf eine - in Setzrichtung 22 gesehen - am hinteren Ende der Hülse 26 vorgesehene Verengung trifft.

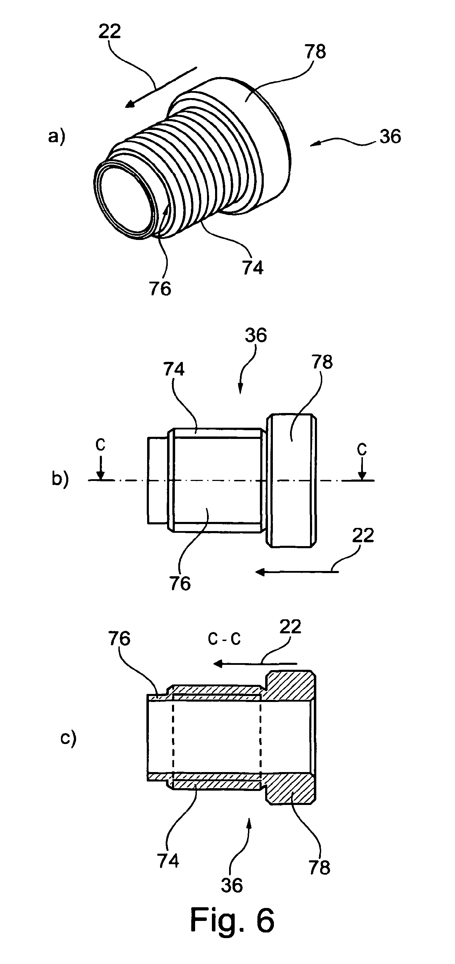

Diese Verengung wird durch ein mit dem - in Setzrichtung gesehen - hinteren Ende der Hülse 26 verschraubbares Haltemittel 36, welches in Fig. 6 in den oben genannten Ansichten dargestellt ist, gebildet. Dieses Haltemittel 36 ähnelt einem schraubenartigem Verschluss aus einem mit einem Aussengewinde 74 versehenen Haltemittelschaft 76 und einem - in Setzrichtung 22 gesehen - am hinteren Ende des Schaftes 76 vorgesehenen, in Aussendurchmesser grösseren Schraubenkopf 78. Das Haltemittel 36 weist hierbei eine axiale Bohrung 80, durch die der - in Setzrichtung 22 gesehen - vor der Aufweitung 34 liegende Schaft 40 des zweiten Einschlagbolzens 32b führbar ist. Das Haltemittel 36 ist über das auf dem Schaft 76 vorgesehene Aussengewinde 74 mit einem entsprechenden Innengewinde 82 des - in Setzbereich 22 gesehen - hinteren Endes der Hülse 26 verschraubbar. Das in die Hülse 26 eingeschraubte Haltemittel 36 bildet zusammen mit der Aufweitung 34 des zweiten Einschlagbolzens 32b ein Begrenzungsmittel zur Begrenzung der in Setzrichtung maximalen Axialbewegung des zweiten Einschlagbolzens 32 beim Vorschieben des mit dem zweiten Einschlagbolzen 32b verbundenen Bohrhammers in Setzrichtung 22.

Das Haltemittel 36 dient aber auch dazu, den zweiten Einschlagbolzen 32b nebst im nachfolgenden näher beschriebenen Kupplungselement in der Hülse 26 zu halten bzw. ein Herausfallen aus dem - in Setzrichtung 22 gesehen - hinteren Ende der Hülse 26 zu verhindern.

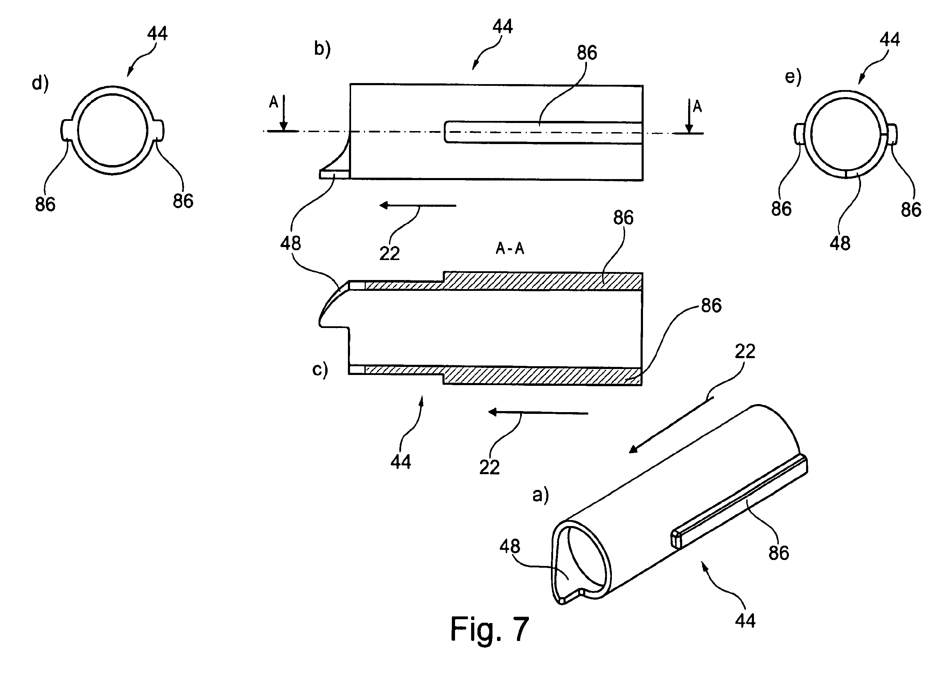

Die in Fig. 7 in den oben genannten Ansichten dargestellte Kupplungshülse 44 dient dazu das Drehmoment des mit der Aufnahme des Bohrhammers oder dergleichen verbundenen Einschlagbolzens 32, der beim Zurückziehen des Bohrhammers links herum dreht, auf die Hülse 26 zu übertragen, um so die Schraubverbindung zwischen Eintreibwerkzeug 10 bzw. Hülse 26 und eingeschlagenem, drehfest verankerten Befestigungselement 16 bzw. Spreizhülse 18 zu trennen. Die Kupplungshülse 44 ist zudem so ausgebildet, dass beim Vorschieben des Bohrhammers oder dergleichen in Setzrichtung 22, egal ob und in welche Richtung der zweite Einschlagbolzen 32b dreht, kein Drehmoment des mit der Aufnahme des Bohrhammers oder dergleichen verbundenen zweiten Einschlagbolzens 32b übertragen wird, vorliegend weder auf die Kupplungshülse 44 noch auf die Hülse 26.

Die Kupplungshülse 44 ist innerhalb der Hülse 26 radial zwischen Hülse 26 und dem mit der Aufnahme des Bohrhammers oder dergleichen verbindbaren zweiten Einschlagbolzen 32b angeordnet. Die Kupplungshülse 44 bildet also ein Zwischenelement zwischen Hülse 26 und zweitem Einschlagbolzen 32b.

Die Übertragung eines Drehmoments von der Kupplungshülse 44 auf die Hülse 26 erfolgt durch permanenten Formschluss zwischen diesen Bauteilen 44 und 26.

Hierzu weist die Hülse 26 auf ihrer Innenseite wenigstens zwei gegenüberliegende, sich in axialer Richtung erstreckende und - in Setzrichtung 22 gesehen - nach hinten offene Nuten 84 auf, in welche zwei entsprechende an der Kupplungshülse 44 angeordnete Stege bzw. Federn beim Einführen der Kupplungshülse 44 in die Hülse 26 quasi zur Bildung eines in Axialrichtung verlaufenden Nut-Feder-Systems , einführbar sind.

Da die Nuten 84 - in Setzrichtung 22 gesehen - vorne, also an ihrer Stirnseite geschlossen sind, wird die axiale Bewegung der Kupplungshülse 44 in Setzrichtung 22 begrenzt. Die Kupplungshülse 44 kann zudem auf einem nach innen gerichteten, vorzugsweise radial umlaufenden Vorsprung 46 der Hülse 26 in Setzrichtung festgelegt sein. Zusammen mit dem vorgenannten Haltemittel 36 ist die Kupplungshülse 44 dann gegen axiales Verschieben fixierbar.

Die Kupplungshülse 44 ist zudem derart ausgebildet, dass diese beim Zurückziehen des Bohrhammers oder dergleichen mit einer entsprechenden Ausbildung des zweiten Einschlagbolzen 32b zusammenwirkt, so dass das Drehmoment dieses zweiten - in Setzrichtung 22 gesehen - links herum drehenden Einschlagbolzens 32b auf die Kupplungshülse 44 und weiter auf die Hülse 26 übertragen wird.

Die Kupplungshülse 44 weist hierzu an dem - in Setzrichtung 22 gesehen - vorderen Ende einen einseitig abgerundeten Vorsprung 48 auf, der mit einem entsprechenden einseitig abgerundeten Vorsprung 50 des zweiten Einschlagbolzen 32b zusammenwirkt, wobei die einseitig abgerundeten Vorsprünge 48, 50 derart ausgebildet sind, dass diese nur beim Zurückziehen des Bohrhammers und Linksdrehung des Einschlagbolzens 32, 32b zusammenwirken und dabei das Drehmoment des zweiten Einschlagbolzens 32 b auf das Kupplungselement übertragen wird.

Der einseitig abgerundete Vorsprung 50 des zweiten Einschlagbolzens 32b ist an einer am - in Setzrichtung 22 gesehen - vorderen Ende des zweiten Einschlagbolzens 32b vorgesehenen Aufweitung 38 vorgesehen.

Diese Aufweitung 38 wird durch das in Fig. 8 in den oben genannten Ansichten dargestellte Teil gebildet, das als separates Teil in Form eines zylinderförmigen Bolzenfusses 38 mit dem - in Setzrichtung 22 gesehen- vorderen Ende des Schaftes 40 des zweiten Einschlagbolzens 32b verschraubt ist. Die Aufweitung 38 weist einen mit einem Aussengewinde versehenen Schaft 88 auf, der mit einem entsprechenden Innengewinde einer einseitig in das - in Setzrichtung 22 gesehen- vordere Ende des Schaftes 40 des zweiten Einschlagbolzens 32b eingebrachten Bohrung 90 verschraubt ist.

Die Ausbildung der Aufweitung 38 als separates Teil ist vorliegend erforderlich, um das Haltemittel 36 und die Kupplungshülse 44 auf den Schaft 40 des zweiten Einschlagbolzens 32b aufschieben zu können.

Fig. 9 zeigt nun in den oben genannten Ansichten ein aus den vorgenannten, in den Fig. 1 bis 8 dargestellten Einzelteilen fertig montiertes Eintreibwerkzeug 10 mit Befestigungselement 16. Das Verfahren zum Zusammenbau des Eintreibwerkzeugs 10 umfasst hierbei folgende Verfahrensschritte:
a) Bereitstellen des ersten Einschlagbolzens 32a, der an seinem - in Setzrichtung 22 gesehen - hinteren Ende eine Aufweitung 42 aufweist,
b) Einführen des ersten Einschlagbolzens 32a mit seinem - in Setzrichtung gesehen - vor der Aufweitung 42 liegenden Teil voran in das - in Setzrichtung gesehen - hintere Ende einer Hülse 26, wobei die Aufweitung 42 dieses Einschlagbolzens 32a auf eine - in Setzrichtung 22 gesehen - im vorderen Bereich der Hülse 26 vorgesehene Verengung trifft, durch welche der - in Sitzrichtung 22 gesehen - vor der Aufweitung 42 liegende Teil des Einschlagbolzens 32a zumindest teilweise aus der Hülse 26 geführt wird,
c) Bereitstellen eines zweiten Einschlagbolzens 32b, dessen - in Setzrichtung 22 gesehen - hinteres Ende derart ausgebildet ist, dass es von der Aufnahme eines Bohrhammers oder dergleichen aufnehmbar ist, wobei der zweite Einschlagbolzen 32b zudem eine Aufweitung 34 aufweist, die nach dem Zusammenbau des Eintreibwerkzeugs 10 ausserhalb der Hülse 26 angeordnet ist,
d) Bereitstellen eines mit dem - in Setzrichtung 22 gesehen - hinteren Ende der Hülse 26 verbindbaren Haltemittels 36, das eine axiale Bohrung aufweist,
e) Aufschieben des Haltemittels 36 auf den zweiten Einschlagbolzen 32b von der - in Setzrichtung 22 gesehen - vorderen Seite des zweiten Einschlagbolzens 32b her, wobei der - in Setzrichtung 22 gesehen - vor der Aufweitung 34 angeordnete Teil 40 des Einschlagbolzens 32b durch die axiale Bohrung des Haltemittels geführt wird und das Haltemittel 36 maximal bis zur Aufweitung 34 aufgeschoben werden kann,
f) Bereitstellen einer Kupplungshülse 44, die nach dem Zusammenbau des Eintreibwerkzeugs 10 innerhalb der Hülse 26 und zwar zwischen der Hülse 26 und dem mit der Aufnahme des Bohrhammers verbindbaren zweiten Einschlagbolzen 32 angeordnet ist,
g) Aufschieben der Kupplungshülse 44 auf den zweiten Einschlagbolzen 32b von der - in Setzrichtung 22 gesehen - vorderen Seite des zweiten Einschlagbolzens 32b her, wobei der - in Setzrichtung 22 gesehen - vor der Aufweitung 34 angeordnete Teil 40 des Einschlagbolzens 32b durch die Kupplungshülse 44 geführt wird und die Kupplungshülse 44 maximal bis zum Haltemittel 36 aufgeschoben werden kann,
h) Verbinden, vorzugsweise Verschrauben einer Aufweitung 38 in Form eines zylinderförmigen Bolzenfusses mit dem - in Setzrichtung 22 gesehen - vorderen Ende des zweiten Einschlagbolzens 32b,
i) Zusammenführen der mit dem ersten Einschlagbolzen 32a versehenen Hülse 26 mit dem zweiten Einschlagbolzen 32b, der das Haltemittel 36 und die Kupplungshülse 44 aufweist, derart, dass der zweite Einschlagbolzen 32b mit seinem - in Setzrichtung gesehen - vorderen Ende voran in die Hülse 26 eingeführt wird, bis die Kupplungshülse auf einem nach innen gerichteten, radial umlaufenden Vorsprung 46 der Hülse 26 positioniert ist und das Haltemittel 36 mit der Hülse 26 verbunden wird, um die Kupplungshülse 44 gegen axiales Verschieben zu fixieren.

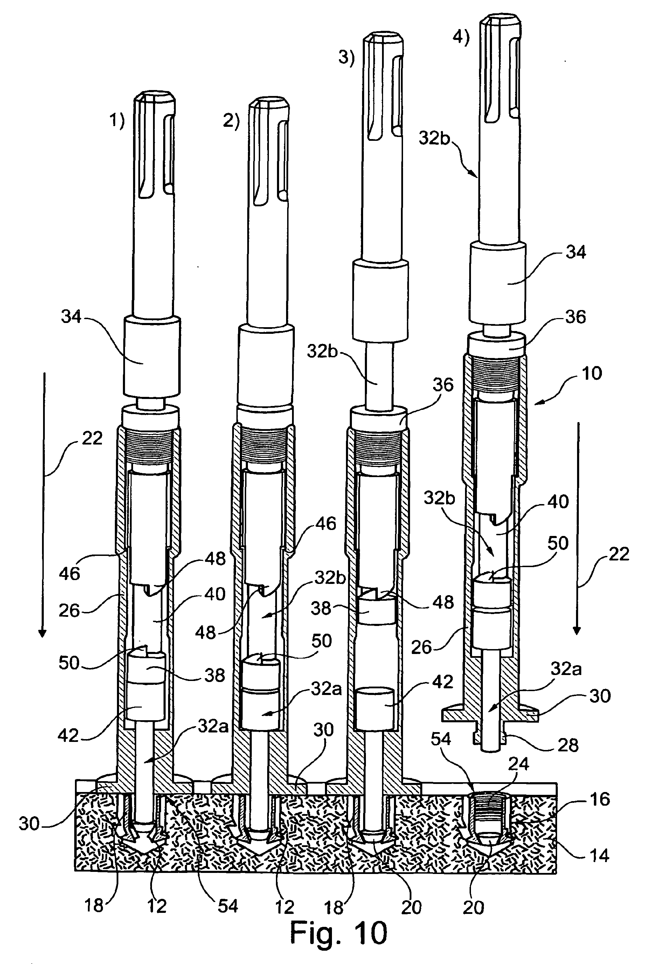

Fig. 10 zeigt nun in den oben genannten Ansichten ein Eintreibwerkzeug beim Setzen eines Befestigungselements in verschiedenen Verfahrenschritten 1), 2), 3) und 4).

Das Verfahren zum Setzen eines mittels Eintreibwerkzeugs 10 und hier nicht dargestellten Bohrhammers oder dergleichen in eine Bohrung 12 eines Verankerungsgrundes 14 durch Einschlagen verankerbaren Befestigungselementes 16, bei dem das Befestigungselement 16 eine Spreizhülse 18 sowie einen darin angeordneten Spreizkörper 20 aufweist und wobei das Befestigungselement 16 in seinem - in Setzrichtung 22 gesehen - hinteren Bereich ein Innengewinde 24, aufweist, erfolgt mit folgenden Verfahrensschritten:
a) Verschrauben des Befestigungselements 16 mit der Hülse 26, die in ihrem - in Setzrichtung 22 gesehen - vorderen Bereich ein zum Innengewinde 24 des Befestigungselements 16 passendes Aussengewinde 28 aufweist,
b) Verbinden des - in Setzrichtung 22 gesehen - hinteren und ausserhalb der Hülse befindlichen Endes des zweiten Einschlagbolzens 32b mit der Aufnahme des hier nicht dargestellten Bohrhammers oder dergleichen,
c) Einbringen des mit der Hülse 26 verschraubten Befestigungselements 16 in die Bohrung 12 des Verankerungsgrund bis das Aufsetzmittel 30 der Hülse 26 auf den Verankerungsgrund 14 aufsetzt, so dass sich das Befestigungselement 16 in vorgegebener Position innerhalb der Bohrung 12 befindet, so wie in 1) dargestellt,
d) Vorschieben des Bohrhammers bei gleichzeitiger Betätigung der Schlagfunktion des Bohrhammers, wodurch die Schlagimpulse über die axial in Setzrichtung verschiebbaren Einschlagbolzen 32b, 32a letztendlich auf den Spreizkörper 20 übertragen werden, so dass der Spreizkörper 20 durch das - in Setzrichtung 22 gesehen - vordere Ende des Einschlagbolzens 32a in Setzrichtung 22 nach vorne, also tiefer in die Spreizhülse 18 gedrückt wird, derart, dass deren Spreizzungen 52 zur Verankerung im Verankerungsgrund 14 aufgespreizt werden, so wie in 2) dargestellt,
e) Zurückziehen des Bohrhammers, sobald das Vorschieben des Bohrhammers aufgrund des vorgesehenen Begrenzungsmittels nicht weiter möglich ist, wobei Drehrichtung des mit der Aufnahme des Bohrhammers verbundenen Einschlagbolzens 32b am Bohrhammer auf links geschaltet wird, wobei über ein Kupplungselement das Drehmoment des dann links laufenden Einschlagbolzens 32b beim Zurückziehen des Bohrhammers auf die Hülse 26 übertragen wird, so wie in 3) dargestellt, dass die Schraubverbindung zwischen Eintreibwerkzeug 10 und eingeschlagenen bzw. verankerten Befestigungselement 16 getrennt wird, so wie in 4) dargestellt.

### Bezugszeichenliste

### (ist Teil der Beschreibung)

- 10: : Eintreibwerkzeug
- 12: : Bohrung
- 14: : Verankerungsgrund
- 16: : Befestigungselement
- 18: : Spreizhülse
- 20: : Spreizkörper
- 22: : Setzrichtung
- 24: : Gewinde des Befestigungselements
- 26: : Hülse
- 28: : Gewinde der Hülse
- 30: : Aufsetzmittel
- 32: : Einschlagbolzen
- 32a: : erster Einschlagbolzen
- 32b: : zweiter Einschlagbolzen
- 34: : Aufweitung
- 36: : Verschluss
- 38: : Aufweitung
- 40: : Schaft
- 42: : Aufweitung
- 44: : Kupplungshülse
- 46: : Vorsprung zur Abstützung der Kupplungshülse
- 48: : halbrunder Vorsprung am Kupplungsgehäuse
- 50: : halbrunder Vorsprung am Einschlagbolzen
- 52: : Spreizzungen
- 54: : Bohrkante
- 56: : Längsschlitze
- 58: : Schneidkante
- 60: : axiale Bohrung innerhalb der Hülse 26
- 62: : Bolzenschaft
- 64: : Verengung
- 66: : Einsteckschaft
- 68: : Einspannbereich
- 70: : Verriegelungsaussparung
- 72: : Drehmitnahmenuten
- 74: : Aussengewinde
- 76: : Schaft des Haltemittels
- 78: : Kopf des Haltemittels
- 80: : axiale Bohrung im Haltemittel
- 82: : Innengewinde
- 84: : Nuten
- 86: : Stege/Federn
- 88: : Schaft
- 90: : Bohrung

## Patentansprüche

1. Eintreibwerkzeug (10) für ein mittels eines Bohrhammers oder dergleichen in eine Bohrung (12) eines Verankerungsgrundes (14) durch Einschlagen verankerbares Befestigungselement (16), wobei das Befestigungselement (16) eine Spreizhülse (18) sowie einen darin angeordneten Spreizkörper (20) aufweist und wobei das Befestigungselement (16) in seinem - in Setzrichtung (22) gesehen - hinteren Bereich ein Gewinde (24), vorzugsweise ein Innengewinde, aufweist, wobei das Eintreibwerkzeug (10) zumindest folgende Teile umfasst:
a) eine Hülse (26), die in ihrem - in Setzrichtung (22) gesehen - vorderen Bereich ein Gewinde (28) aufweist, das mit dem Gewinde (24) des Befestigungselements (16) zum Halten und Positionieren desselben verschraubbar ist, wobei die Hülse (26) wenigstens ein Aufsetzmittel (30) aufweist, mit dem das Eintreibwerkzeug (10) auf dem Verankerungsgrund (14) aufsetzbar ist, derart, dass das Befestigungselement (16) in vorgegebener Position zumindest teilweise, vorzugsweise vollständig, innerhalb der Bohrung (12) angeordnet ist,
b) einen Einschlagbolzen (32), welcher innerhalb der Hülse (26) axial bewegbar angeordnet ist und mit der Stirnseite seines - in Setzrichtung (22) gesehen - vorderen Endes auf den Spreizkörper (20) bringbar ist, wenn das Befestigungselement (16) mit dem Eintreibwerkzeug (10) verschraubt ist, wobei das - in Setzrichtung (22) gesehen - hintere Ende des Einschlagbolzens (32) ausserhalb der Hülse (26) endet und derart ausgebildet ist, dass es von der Aufnahme des Bohrhammers aufnehmbar ist, um den Einschlagbolzen (32) beim Vorschieben des Bohrhammers in Setzrichtung (22) mit Schlagimpulsen zu versehen, die letztendlich auf den Spreizkörper (20) übertragbar sind,
c) wenigstens ein Begrenzungsmittel zur Begrenzung der maximalen Axialbewegung des Einschlagbolzens (32) in Setzrichtung (22) beim Vorschieben des Bohrhammers in Setzrichtung (22),
d) wobei der Einschlagbolzen (32) mehrteilig ausgebildet ist und zumindest zwei Einschlagbolzen (32a, 32b) umfasst,
**dadurch gekennzeichnet, dass** das Eintreibwerkzeug (10) ferner umfasst:
e) ein Kupplungselement, das das Drehmoment des mit der Aufnahme des Bohrhammers verbundenen links laufenden Einschlagbolzens (32) beim Zurückziehen des Bohrhammers auf die Hülse (26) überträgt, so dass die Schraubverbindung zwischen Eintreibwerkzeug (10) und eingeschlagenem Befestigungselement (16) getrennt wird, und das beim Vorschieben des Bohrhammers in Setzrichtung (22) kein Drehmoment des mit der Aufnahme des Bohrhammers verbundenen Einschlagbolzens (32) überträgt,
wobei
f) der Einschlagbolzen (32) einen ersten Einschlagbolzen (32a) umfasst, welcher innerhalb der Hülse (26) axial bewegbar angeordnet ist und mit der Stirnseite seines - in Setzrichtung (22) gesehen - vorderen Endes auf den Spreizkörper (20) bringbar ist, wenn das Befestigungselement (16) mit dem Eintreibwerkzeug (10) verschraubt ist, wobei das - in Setzrichtung (22) gesehen - hintere Ende des ersten Einschlagbolzens (32a) innerhalb der Hülse (26) endet, und der Einschlagbolzen (32) einen zweiten Einschlagbolzen (32b) umfasst, welcher innerhalb der Hülse (26) axial bewegbar angeordnet ist und mit der Stirnseite seines - in Setzrichtung (22) gesehen - vorderen Endes auf die Stirnseite des - in Setzrichtung (22) gesehen - hinteren Endes des ersten Einschlagbolzens (32a) bringbar ist, wobei das - in Setzrichtung (22) gesehen - hintere Ende des zweiten Einschlagbolzens (32b) ausserhalb der Hülse (26) endet und derart ausgebildet ist, dass es von der Aufnahme des Bohrhammers aufnehmbar ist, um den zweiten Einschlagbolzen (32b) beim Vorschieben des Bohrhammers in Setzrichtung (22) mit Schlagimpulsen zu versehen, die auf den ersten Einschlagbolzen (32a) und letztendlich auf den Spreizkörper (20) übertragbar sind.

2. Eintreibwerkzeug (10) nach Anspruch 1, **dadurch gekennzeichnet, dass** das Begrenzungsmittel zur Begrenzung der maximalen Axialbewegung des Einschlagbolzens (32) bzw. des ersten und/oder zweiten Einschlagbolzens (32a, 32b) durch eine Aufweitung am Einschlagbolzen (32, 32a, 32b) gebildet ist, die auf eine an der Hülse (26) vorgesehene Verengung trifft.

3. Eintreibwerkzeug (10) nach einem der Ansprüche 1 oder 2, **dadurch gekennzeichnet, dass** der mit der Aufnahme des Bohrhammers verbindbare Einschlagbolzen (32, 32b) ausserhalb der Hülse (26) eine Aufweitung (34), vorzugsweise eine radiale Verdickung, aufweist, die zur Begrenzung der maximalen Axialbewegung dieses Einschlagbolzens (32, 32b) auf eine - in Setzrichtung (22) gesehen - am hinteren Ende der Hülse (26) vorgesehene Verengung trifft.

4. Eintreibwerkzeug (10) nach Anspruch 3, **dadurch gekennzeichnet, dass** die Verengung durch ein mit dem - in Setzrichtung gesehen - hinteren Ende der Hülse (26) verbindbares, vorzugsweise verschraubbares Haltemittel, vorzugsweise nach Art eines Verschlusses (36) gebildet ist, welches eine axiale Bohrung aufweist, durch die der - in Sitzrichtung (22) gesehen - vor der Aufweitung (34) angeordnete Teil des Einschlagbolzens (32, 32b) führbar ist.

5. Eintreibwerkzeug (10) nach einem der Ansprüche 1 bis 4, **dadurch gekennzeichnet, dass** der mit der Aufnahme des Bohrhammers verbindbare Einschlagbolzen (32, 32b) vorzugsweise an dem - in Setzrichtung (22) gesehen - vorderen Ende eine Aufweitung (38), insbesondere eine radiale Verdickung bzw. einen zylinderförmigen Fuss, aufweist.

6. Eintreibwerkzeug (10) nach Anspruch 5, **dadurch gekennzeichnet, dass** die Aufweitung (38) als ein separates Teil ausgebildet ist, das mit dem übrigen Teil, insbesondere mit dem Schaft (40), des mit der Aufnahme des Bohrhammers verbindbaren Einschlagbolzens (32, 32b) verbindbar, vorzugsweise verschraubbar, ist.

7. Eintreibwerkzeug (10) nach einem der Ansprüche 1 bis 6, **dadurch gekennzeichnet, dass** der erste Einschlagbolzen (32a) innerhalb der Hülse vorzugsweise an seinem - in Setzrichtung (22) gesehen - hinteren Ende eine Aufweitung (42), insbesondere eine radiale Verdickung bzw. einen zylinderförmigen Kopf, aufweist, welche zur Begrenzung der maximalen Axialbewegung dieses Einschlagbolzens (32a) auf eine - in Setzrichtung (22) gesehen - am vorderen Ende der Hülse (26) vorgesehene Verengung trifft.

8. Eintreibwerkzeug (10) nach einem der Ansprüche 1 bis 7, **dadurch gekennzeichnet, dass** eine bzw. die - in Setzrichtung (22) gesehen - am vorderen Ende der Hülse (26) vorgesehene Verengung als in der Hülse (26) nach innen gerichteter Vorsprung (40) ausgebildet ist, der vorzugsweise radial umläuft und eine axiale Öffnung aufweist, durch die der - in Sitzrichtung (22) gesehen - vor einer bzw. vor der Aufweitung (38, 42) angeordnete Teil des Einschlagbolzens (32, 32a) führbar ist.

9. Eintreibwerkzeug (10) nach einem der Ansprüche 1 bis 8, **dadurch gekennzeichnet, dass** das Aufsetzmittel (30) als ein aussen an der Hülse (26) radial umlaufender Kragen ausgebildet ist, der einen grösseren Aussendurchmesser aufweist als die Bohrung (12) und mit der Unterseite auf dem Verankerungsgrund (14) bzw. der Oberkante der Bohrung (12) aufsetzbar ist.

10. Eintreibwerkzeug (10) nach einem der Ansprüche 1 bis 9, **dadurch gekennzeichnet, dass** das Kupplungselement ein zwischen der Hülse (26) und dem mit der Aufnahme des Bohrhammers verbindbaren Einschlagbolzen (32) angeordnetes Zwischenelement, vorzugsweise eine innerhalb der Hülse (26) angeordnete Kupplungshülse (44), ist, welches mit der Hülse (26) zur Übertragung des Drehmoments in Wirkverbindung steht, vorzugsweise permanent, und derart ausgebildet ist, dass es beim Zurückziehen des Bohrhammers mit einer entsprechenden Ausbildung an dem mit der Aufnahme des Bohrhammers verbundenen links laufenden Einschlagbolzen (32, 32b) zusammenwirkt, so dass das Drehmoment dieses Einschlagbolzens (32, 32 b) auf das Zwischenelement und weiter auf die Hülse (26) übertragen wird.

11. Eintreibwerkzeug (10) nach einem der Ansprüche 1 bis 10, **dadurch gekennzeichnet, dass** das Kupplungselement in der Hülse (26) auf einem nach innen gerichteten, vorzugsweise radial umlaufenden Vorsprung (46) positionierbar ist und über wenigstens ein Haltemittel (36) wenigstens gegen axiales Verschieben fixierbar ist.

12. Eintreibwerkzeug (10) nach einem der Ansprüche 1 bis 11, **dadurch gekennzeichnet, dass** das Kupplungselement und die Hülse (26) über Formschluss, vorzugsweise über ein in Axialrichtung verlaufendes Nut-Feder-System, zusammenwirken, derart, dass ein Drehmoment des Kupplungselements auf die Hülse (26) übertragbar ist.

13. Eintreibwerkzeug (10) nach einem der Ansprüche 1 bis 12, **dadurch gekennzeichnet, dass** das Kupplungselement bzw. die Kupplungshülse (44) an dem - in Setzrichtung (22) gesehen - vorderen Ende einen halbrunden Vorsprung (48) aufweist, der mit einem entsprechenden halbrunden Vorsprung (50) an dem mit der Aufnahme des Bohrhammers verbindbaren Einschlagbolzen (32, 32b) zusammenwirkt, wobei die halbrunden Vorsprünge (48, 50) derart ausgebildet sind, dass diese nur beim Zurückziehen des Bohrhammers und Linksdrehung des Einschlagbolzens (32, 32b) zusammenwirken und das Drehmoment des Einschlagbolzens (32, 32 b) auf das Kupplungselement übertragen wird.

14. Eintreibwerkzeug (10) nach einem der Ansprüche 1 bis 13, **dadurch gekennzeichnet, dass** das Befestigungselement (12) ein Expansionsanker oder vorzugsweise ein Hinterschnittanker, ganz bevorzugt ein selbstschneidender Hinterschnittanker, ist.

15. Verfahren zum Setzen eines mittels eines Bohrhammers oder dergleichen und mittels eines Eintreibwerkzeugs (10) nach einem der Ansprüche 1 bis 14 in eine Bohrung (12) eines Verankerungsgrundes (14) durch Einschlagen verankerbaren Befestigungselementes (16), wobei das Befestigungselement (16) eine Spreizhülse (18) sowie einen darin angeordneten Spreizkörper (20) aufweist und wobei das Befestigungselement (16) in seinem - in Setzrichtung (22) gesehen - hinteren Bereich ein Gewinde (24), vorzugsweise ein Innengewinde aufweist, mit folgenden Verfahrensschritten:
a) Verschrauben des Befestigungselements (16) mit der Hülse (26), die in ihrem - in Setzrichtung (22) gesehen - vorderen Bereich ein zum Gewinde (24) des Befestigungselements (16) passendes Gewinde (28), vorzugsweise ein Aussengewinde, aufweist,
b) Verbinden des - in Setzrichtung (22) gesehen - hinteren und ausserhalb der Hülse befindlichen Endes des Einschlagbolzens (32, 32b) mit der Aufnahme des Bohrhammers,
c) Einbringen des mit der Hülse verschraubten Befestigungselements (16) in die Bohrung (12) des Verankerungsgrundes bis das Aufsetzmittel (30) der Hülse (26) auf den Verankerungsgrund (14) aufsetzt, so dass sich das Befestigungselement (16) in vorgegebener Position innerhalb der Bohrung (12) befindet,
d) Vorschieben des Bohrhammers bei gleichzeitiger Betätigung der Schlagfunktion des Bohrhammers, wodurch die Schlagimpulse über den axial in Setzrichtung verschobenen, mehrteiligen, ein Kupplungselement aufweisenden Einschlagbolzen (32, 32b, 32a) letztendlich auf den Spreizkörper (20) übertragen werden, so dass der Spreizkörper (20) durch das - in Setzrichtung (22) gesehen - vordere Ende des Einschlagbolzens (32, 32a) in Setzrichtung (22) nach vorne, also tiefer in die Spreizhülse (18) gedrückt wird, derart, dass deren Spreizzungen (52) zur Verankerung im Verankerungsgrund (14) aufgespreizt werden,
e) Zurückziehen des Bohrhammers, sobald das Vorschieben des Bohrhammers aufgrund des vorgesehenen Begrenzungsmittels nicht weiter möglich ist, wobei die Drehrichtung des mit der Aufnahme des Bohrhammers verbundenen Einschlagbolzens (32, 32b) am Bohrhammer auf links geschaltet wird, wobei über das Kupplungselement das Drehmoment des dann links laufenden Einschlagbolzens (32, 32b) beim Zurückziehen des Bohrhammers auf die Hülse (26) übertragen wird, so dass die Schraubverbindung zwischen Eintreibwerkzeug (10) und eingeschlagenen bzw. verankerten Befestigungselement (16) getrennt wird.

16. Verfahren nach Anspruch 15, **dadurch gekennzeichnet, dass** das Befestigungselement (16), vorzugsweise ein Hinterschnittanker, oberflächennah verankert wird, derart, dass das - in Setzrichtung (22) gesehen - hintere Ende der Spreizhülse (18) im Wesentlichen mit der Oberkante (54) der Bohrung (12) abschliesst.

17. Verfahren nach Anspruch 15 oder 16, **dadurch gekennzeichnet, dass** das verankerte Befestigungselement (16) nach dem Entfernen bzw. Abschrauben des Eintreibwerkzeugs (10) zur weiteren Verwendung, vorzugsweise zur Befestigung von Bauteilen, zur Verfügung steht, wobei entsprechende Befestigungsmittel, vorzugsweise zur Befestigung der Bauteile, in das Befestigungselement (16) bzw. in die Spreizhülse (18) eingeschraubt werden.

18. Verfahren nach einem der Ansprüche 15 bis 17, **dadurch gekennzeichnet, dass** das mit dem Bohrhammer oder dergleichen verbundene Eintreibwerkzeugs (10) nach dem Entfernen vom eingeschlagenen Befestigungselement (16) mit einem neuen Befestigungselement (16) versehen wird, so dass ein neuer Zyklus zum Setzen des Befestigungselements (16) erfolgen kann.

19. Verfahren zum Zusammenbau eines Eintreibwerkzeugs (10), nach einem der Ansprüche 1 bis 14, umfassend folgende Verfahrensschritte:
a) Bereitstellen eines ersten Einschlagbolzens (32a), der an seinem - in Setzrichtung (22) gesehen - hinteren Ende eine Aufweitung (42) aufweist,
b) Einführen des ersten Einschlagbolzens (32a) mit seinem - in Setzrichtung gesehen - vor der Aufweitung (42) liegenden Teil voran in das - in Setzrichtung gesehen - hintere Ende einer Hülse (26), wobei die Aufweitung (42) dieses Einschlagbolzens (32a) auf eine - in Setzrichtung (22) gesehen - im vorderen Bereich der Hülse (26) vorgesehene Verengung mit axialer Bohrung trifft, durch welche der - in Sitzrichtung (22) gesehen - vor der Aufweitung (42) liegende Teil des Einschlagbolzens (32a) zumindest teilweise aus der Hülse (26) geführt wird,
c) Bereitstellen eines zweiten Einschlagbolzens (32b), dessen - in Setzrichtung (22) gesehen - hinteres Ende derart ausgebildet ist, dass es von der Aufnahme eines Bohrhammers oder dergleichen aufnehmbar ist, wobei der zweite Einschlagbolzen (32b) zudem eine Aufweitung (34) aufweist, die nach dem Zusammenbau des Eintreibwerkzeugs (10) ausserhalb der Hülse (26) angeordnet ist,
d) Bereitstellen eines mit dem - in Setzrichtung gesehen - hinteren Ende der Hülse (26) verbindbaren Haltemittels (36), das eine axiale Bohrung aufweist,
e) Aufschieben des Haltemittels (36) auf den zweiten Einschlagbolzen (32b) von der - in Setzrichtung gesehen - vorderen Seite des zweiten Einschlagbolzens her, wobei das - in Setzrichtung (22) gesehen - vor der Aufweitung (34) angeordnete Teil des Einschlagbolzens (32b) durch die axiale Bohrung des Haltemittels geführt wird und das Haltemittel maximal bis zur Aufweitung aufgeschoben werden kann,
f) Bereitstellen einer Kupplungshülse (44), die nach dem Zusammenbau des Eintreibwerkzeugs (10) innerhalb der Hülse (26) und zwar zwischen der Hülse (26) und dem mit der Aufnahme des Bohrhammers verbindbaren zweiten Einschlagbolzen (32) angeordnet ist,
g) Aufschieben der Kupplungshülse (44) auf den zweiten Einschlagbolzen von der - in Setzrichtung gesehen - vorderen Seite des zweiten Einschlagbolzens her, wobei das - in Setzrichtung (22) gesehen - vor der Aufweitung (34) angeordnete Teil des Einschlagbolzens (32b) durch die Kupplungshülse (44) geführt wird und die Kupplungshülse (44) maximal bis zum Haltemittel aufgeschoben werden kann,
h) Verbinden, vorzugsweise Verschrauben einer Aufweitung (38) in Form eines zylinderförmigen Fusses mit dem - in Setzrichtung (22) gesehen - vorderen Ende des zweiten Einschlagbolzens (32b),
i) Zusammenführen der mit dem ersten Einschlagbolzen versehenen Hülse mit dem zweiten Einschlagbolzen, der das Haltemittel und die Kupplungshülse aufweist, derart, dass der zweite Einschlagbolzen mit seinem - in Setzrichtung gesehen - vorderen Ende voran in die Hülse (26) eingeführt wird,
bis die Kupplungshülse auf einem nach innen gerichteten, radial umlaufenden Vorsprung (46) der Hülse (26) positioniert wird und das Haltemittel (36) mit der Hülse (26) verbunden wird, um die Kupplungshülse gegen axiales Verschieben zu fixieren.

## Claims

1. Driving tool (10) for a fastening element (16) which can be anchored by pounding by means of a hammer drill or the like in a borehole (12) of an anchoring base (14), wherein the fastening element (16) has a spreading sleeve (18) and a spreading body (20) located therein and wherein the fastening element (16) has a thread (24), preferably an internal thread, in its rear section - as seen in the setting direction (22) - wherein the driving tool (10) comprises at least the following parts:
a) a sleeve (26), which has a thread (28) in its front section - as seen in the setting direction (22) - which can be screwed together with the thread (24) of the fastening element (16) for holding and positioning the latter, wherein the sleeve (26) has at least one seating means (30), with which the driving tool (10) can be seated on the anchoring base (14), such that the fastening element (16) is disposed in predetermined position at least partly, preferably entirely, inside the borehole (12),
b) an impactor (32), which is axially movable inside the sleeve (26) and which can be brought by the end face of its front end - as seen in the setting direction (22) - against the spreading body (20) when the fastening element (16) is screwed together with the driving tool (10), while the rear end of the impactor (32) - as seen in the setting direction (22) - ends outside the sleeve (26) and is configured so that it can be taken up by the receiver of the hammer drill in order to apply pounding impacts to the impactor (32) when the hammer drill is shoved forward in the setting direction (22), which can ultimately be transmitted to the spreading body (20),
c) at least one limiting means for limiting the maximum axial movement of the impactor (32) in the setting direction (22) when the hammer drill is shoved in the setting direction (22),
d) wherein the impactor (32) is a multipiece design and comprises at least two impactors (32a, 32b),
**characterized in that** the driving tool (10) further comprises:
e) a coupling element, which transmits the torque of the leftward running impactor (32) joined to the receiver of the hammer drill when the hammer drill is retracted onto the sleeve (26), so that the screw connection between driving tool (10) and pounded fastening element (16) is broken, and which transmits no torque of the impactor (32) joined to the receiver of the hammer drill when the hammer drill is shoved in the setting direction (22),
wherein
f) the impactor (32) comprises a first impactor (32a), which is axially movable inside the sleeve (26) and which can be brought by the end face of its front end - as seen in the setting direction (22) - against the spreading body (20) when the fastening element (16) is screwed together with the driving tool (10), while the rear end of the first impactor (32a) - as seen in the setting direction (22) - ends inside the sleeve (26), and the impactor (32) comprises a second impactor (32b), which is axially movable inside the sleeve (26) and which can be brought by the end face of its front end - as seen in the setting direction (22) - against the end face of the rear end of the first impactor (32a) - as seen in the setting direction (22) - while the rear end of the second impactor (32b) - as seen in the setting direction (22) - ends outside the sleeve (26) and is configured so that it can be taken up by the receiver of the hammer drill in order to apply pounding impacts to the second impactor (32b) when the hammer drill is shoved forward in the setting direction (22), which can be transmitted to the first impactor (32a) and ultimately to the spreading body (20).

2. Driving tool (10) according to claim 1, **characterized in that** the limiting means for limiting the maximum axial movement of the impactor (32) or the first and/or second impactor (32a, 32b) is formed by a broadening on the impactor (32, 32a, 32b) which hits against a narrowing provided on the sleeve (26).

3. Driving tool (10) according to one of claims 1 or 2, **characterized in that** the impactor (32, 32b) which can be connected to the receiver of the hammer drill has a broadening (34), preferably a radial thickening, outside the sleeve (26), which strikes against a narrowing provided at the rear end of the sleeve (26) - as seen in the setting direction (22) - in order to restrict the maximum axial movement of this impactor (32, 32b).

4. Driving tool (10) according to claim 3, **characterized in that** the narrowing is formed by a holding means, preferably in the manner of a catch (36), which can be connected, preferably by screwing, to the rear end of the sleeve (26) - as seen in the setting direction - which has an axial bore through which the part of the impactor (32, 32b) disposed in front of the broadening (34) - as seen in the setting direction (22) - can be guided.

5. Driving tool (10) according to one of claims 1 to 4, **characterized in that** the impactor (32, 32b) which can be connected to the receiver of the hammer drill has a broadening (38), especially a radial thickening or a cylindrical foot, at the front end - as seen in the setting direction (22).

6. Driving tool (10) according to claim 5, **characterized in that** the broadening (38) is configured as a separate part, which can be connected, preferably screwed, to the other part, especially to the shaft (40), of the impactor (32, 32b) which can be connected to the receiver of the hammer drill.

7. Driving tool (10) according to one of claims 1 to 6, **characterized in that** the first impactor (32a) has a broadening (42), especially a radial thickening or a cylindrical foot, inside the sleeve, preferably at its rear end - as seen in the setting direction (22), which strikes against a narrowing provided at the front end of the sleeve (26) - as seen in the setting direction (22) - in order to restrict the maximum axial movement of this impactor (32a).

8. Driving tool (10) according to one of claims 1 to 7, **characterized in that** a narrowing or the narrowing provided at the front end of the sleeve (26) - as seen in the setting direction (22) - is configured as an inward directed shoulder (40) in the sleeve (26), which preferably runs radially around it and has an axial opening through which a part of the impactor (32, 32a) disposed in front of a broadening or the broadening (38, 42) - as seen in the setting direction (22) - can be guided.

9. Driving tool (10) according to one of claims 1 to 8, **characterized in that** the seating means (30) is configured as a radially encircling collar on the outside of the sleeve (26), which has a larger outer diameter than the bore (12) and can be placed by its bottom end on the anchoring base (14) or the upper edge of the bore (12).

10. Driving tool (10) according to one of claims 1 to 9, **characterized in that** the coupling element is an intermediate element disposed between the sleeve (26) and the impactor (32) which can be connected to the receiver of the hammer drill, preferably inside the sleeve (26), which stands in operative connection with the sleeve (26) for the transmittal of the torque, preferably in permanent manner, and which is configured so that when the hammer drill is retracted it interacts with a corresponding formation on the leftward running impactor (32, 32b) connected to the receiver of the hammer drill, so that the torque of this impactor (32, 32b) is transmitted to the intermediate element and then to the sleeve (26).

11. Driving tool (10) according to one of claims 1 to 10, **characterized in that** the coupling element can be positioned in the sleeve (26) on an inwardly directed, preferably radially encircling shoulder (46), and fixed by at least one holding means (36) against at least axial shifting.

12. Driving tool (10) according to one of claims 1 to 11, **characterized in that** the coupling element and the sleeve (26) interact by form fitting, preferably through a tongue and groove system running in the axial direction, so that a torque of the coupling element can be transmitted to the sleeve (26).

13. Driving tool (10) according to one of claims 1 to 12, **characterized in that** the coupling element or the coupling sleeve (44) has a half-round shoulder at the front end - as seen in the setting direction (22) - which interacts with a corresponding half-round shoulder (50) on the impactor (32, 32b) which can be connected to the receiver of the hammer drill, while the half-round shoulders (48, 50) are configured so that they only interact upon retraction of the hammer drill and leftward turning of the impactor (32, 32b) and the torque of the impactor (32, 32b) is transmitted to the coupling element.

14. Driving tool (10) according to one of claims 1 to 13, **characterized in that** the fastening element (12) is an expansion anchor or preferably an undercut anchor, most preferably a self-tapping undercut anchor.

15. Method for setting a fastening element (16) which can be anchored by pounding with a hammer drill or the like and by means of a driving tool (10) according to one of claims 1 to 14 in a bore (12) of an anchoring base (14), wherein the fastening element (16) has a spreading sleeve (18) as well as a spreading body (20) disposed therein and wherein the fastening element (16) has a thread in its rear region - as seen in the setting direction (22) - preferably an internal thread, with the following steps of the method:
a) screwing the fastening element (16) to the sleeve (26), which has a thread (28) mating with the thread (24) of the fastening element (16) in its front region - as seen in the setting direction (22) - preferably an external thread,
b) connecting of the rear end of the impactor (32, 32b) - as seen in the setting direction (22) - which is located outside the sleeve to the receiver of the hammer drill,
c) introducing the fastening element (16), screwed together with the sleeve, into the bore (12) of the anchoring base until the seating means (30) of the sleeve (26) sits on the anchoring base (14), so that the fastening element (16) is located in a predetermined position inside the bore (12),
d) shoving the hammer drill forward while at the same time activating the striking function of the hammer drill, so that the striking impacts are transmitted via the multipiece impactor (32, 32b, 32a), axially shifted in the setting direction and having a coupling element, ultimately to the spreading body (20), so that the spreading body (20) is forced forward in the setting direction (22), i.e., deeper into the spreading sleeve (18), by the front end of the impactor (32, 32a) - as seen in the setting direction (22) - so that its spreading tongues (52( are spread apart for the anchoring in the anchoring base (14),
e) retracting of the hammer drill as soon as no further forward shoving of the hammer drill is possible on account of the limiting means provided, whereupon the direction of turning of the impactor (32, 32b) on the hammer drill, connected to the receiver of the hammer drill, switches to the left, whereupon the torque of the now leftward running impactor (32, 32b) is transmitted via the coupling element to the sleeve (26) as the drilling hammer is retracted, so that the screw connection between driving tool (10) and pounded or anchored fastening element (16) is broken.

16. Method according to claim 15, **characterized in that** the fastening element (16), preferably an undercut anchor, is anchored near the surface, so that the rear end of the spreading sleeve (18) - as seen in the setting direction (22) - is essentially flush with the upper edge (54) of the bore (12).

17. Method according to claim 15 or 16, **characterized in that** the anchored fastening element (16) after the removal or unscrewing of the driving tool (10) is available for further use, preferably for fastening of structural parts, whereupon corresponding fastening means, preferably for the fastening of the structural parts, are screwed into the fastening element (16) or into the spreading sleeve (18).

18. Method according to one of claims 15 to 17, **characterized in that** the driving tool (10) connected to the hammer drill or the like, after the removal of the pounded fastening element (16), is provided with a new fastening element (16), so that a new cycle of setting the fastening element (16) can occur.

19. Method for assembly of a driving tool (10), according to one of claims 1 to 14, comprising the following steps of the method:
a) providing of a first impactor (32a), having a broadening (42) at its rear end - as seen in the setting direction (22),
b) introducing of the first impactor (32a) with its part situated before the broadening (42) in front - as seen in the setting direction - into the rear end of a sleeve (26) - as seen in the setting direction, whereupon the broadening (42) of this impactor (32a) encounters a narrowing with an axial bore, provided in the front region of the sleeve (26) - as seen in the setting direction (22) - through which the part of the impactor (32a) situated before the broadening (42) - as seen in the setting direction (22) - is led at least partly out from the sleeve (26),
c) providing of a second impactor (32b), whose rear end - as seen in the setting direction (22) - is configured so that it can be taken up by the receiver of a hammer drill or the like, wherein the second impactor (32b) furthermore has a broadening (34), which is disposed outside the sleeve (26) after the driving tool has been assembled,
d) providing of a holding means (36), which can be connected to the rear end of the sleeve (26) - as seen in the setting direction - having an axial bore,
e) shoving of the holding means (36) onto the second impactor (32b) from the front side - as seen in the setting direction - of the second impactor, whereupon the part of the impactor (32b) located before the broadening (34) - as seen in the setting direction (22) - is led through the axial bore of the holding means and the holding means can be shoved at most as far as the broadening,
f) providing of a coupling sleeve (44), which after the driving tool (10) has been assembled is arranged inside the sleeve (26), namely, between the sleeve (26) and the second impactor (32) which can be connected to the receiver of the hammer drill,
g) shoving of the coupling sleeve (44) onto the second impactor from the front side - as seen in the setting direction - of the second impactor, whereupon the part of the impactor (32b) located before the broadening - as seen in the setting direction (22) - is led through the coupling sleeve (44) and the coupling sleeve (44) can be shoved at most as far as the holding means,
h) connecting, preferably by screwing, of a broadening (38) in the form of a cylindrical foot to the front end of the second impactor (32b) - as seen in the setting direction (22),
i) bringing together the sleeve provided with the first impactor and the second impactor having the holding means and the coupling sleeve, so that the second impactor is introduced by its front end - as seen in the setting direction - into the sleeve (26),
until the coupling sleeve is positioned on an inwardly directed, radially encircling shoulder (46) of the sleeve (26) and the holding means (36) is connected to the sleeve (26) to fix the coupling sleeve against axial displacement.

## Revendications

1. Outil à enfoncer (10) pour un élément de fixation (16) pouvant être ancré par frappe à l'aide d'un marteau perforateur ou similaire dans un alésage (12) d'un support d'ancrage (14}, cet élément de fixation (16) comportant une goupille d'expansion (18} et un corps d'expansion (20) qui est disposé à l'intérieur, ou l'élément de fixation (16) comporte sur sa partie arrière - vue dans le sens de l'enfoncement (22) - un filet (24), de préférence un filet intérieur, l'outil à enfoncer (10) étant constitué par au moins les pièces suivantes :
a) une douille (25} qui comporte sur sa partie frontale - vue dans le sens de l'enfoncement (22} - un filet (28) qui peut être vissé sur le filet (24) de l'élément de fixation (16) en vue du maintien ou du positionnement de celui-ci, si bien que la douille (26) dispose d'au moins un moyen de montage (30), qui peut être monté avec l'outil à enfoncer (10) sur le support d'ancrage (14), de telle sorte que l'élément de fixation (16) soit installé sur la position prescrite qui se trouve - au moins partiellement et de préférence complètement - à l'intérieur de l'alésage (12),
b) une goupille à enfoncer (32) qui est disposée de manière mobile sur le plan axial à l'intérieur de la douille (26) ou qui peut être intégrée par son côté avant - vu dans le sens de l'enfoncement (22) - dans le corps d'expansion (20) si l'élément de fixation (16) est vissé avec l'outil à enfoncer (10), si bien que l'extrémité arrière de la goupille à enfoncer (32) - vue dans le sens de l'enfoncement (22) - aboutit à l'extérieur de la douille (26) et elle est configurée de telle façon qu'elle peut être logée dans le logement du marteau perforateur, afin de soumettre la goupille à enfoncer (32) à des impulsions de frappe qui peuvent être transmises au bout du compte au corps d'expansion (20) lors de la poussée vers l'avant du marteau perforateur dans le sens de l'enfoncement (22).
c) au moins un moyen de limitation conçu pour limiter le mouvement axial maximal de la goupille à enfoncer (32) dans le sens de l'enfoncement (22) lors de la poussée vers l'avant du marteau perforateur dans le sens de l'enfoncement (22),
d) en même temps, la goupille à enfoncer (32) est constituée par plusieurs éléments, et elle est constituée par au moins deux goupilles à enfoncer (32a, 32b),
**caractérisé en ce que** l'outil à enfoncer (10) comprend par ailleurs :
e) un élément d'accouplement qui transmet le couple de rotation de la goupille à enfoncer (32) tournant à gauche et reliée au logement du marteau perforateur lors du retrait de ce marteau perforateur sur la douille (26), si bien que la liaison par vis entre l'outil à enfoncer (10) ou de l'élément de fixation (16) enfoncé est coupée, et qu'aucun couple de rotation n'est transmis à la goupille à enfoncer (32) reliée au logement du marteau perforateur lors de la poussée vers l'avant du marteau perforateur dans le sens de l'enfoncement (22),
sachant que
f) la goupille à enfoncer (32) comprend une première goupille à enfoncer (32a) qui est disposée de manière mobile sur le plan axial à l'intérieur de la douille (26) ou qui peut être intégrée avec le côté avant de son extrémité avant
- vue dans le sens de l'enfoncement (22) - dans le corps d'expansion (20) lorsque l'élément de fixation (16) est fixé avec l'outil à enfoncer (10), quand l'extrémité arrière - vue dans le sens de l'enfoncement (22) - de la première goupille à enfoncer (32a) aboutit à l'intérieur de la douille (26), ou la goupille à enfoncer (32) comprend une deuxième goupille à enfoncer (32b) qui est disposée de manière mobile sur le plan axial à l'intérieur de la douille (26) et qui peut être insérée avec le côté avant de son extrémité avant - vue dans le sens de l'enfoncement (22) - sur le côté avant de l'extrémité arrière de la première goupille à enfoncer (32a)
- vue dans le sens de l'enfoncement (22), si bien que l'extrémité arrière de la deuxième goupille à enfoncer (32b)
- vue dans le sens de l'enfoncement (22) - aboutit à l'extérieur de la douille (26), ou est configurée de telle façon qu'elle peut être logée dans le logement du marteau perforateur, afin de soumettre la deuxième goupille à enfoncer (32b) à des impulsions de frappe qui peuvent être transmises à la première goupille à enfoncer (32a) ou au bout du compte au corps d'expansion (20) lors de la poussée vers l'avant du marteau perforateur dans le sens de l'enfoncement (22).

2. Outil à enfoncer (10) selon la revendication 1, **caractérisé en ce que** le moyen de limitation conçu pour limiter le mouvement axial maximal de la goupille à enfoncer (32) ou de la première et/ou deuxième goupille à enfoncer (32a, 32b) est constitué par un élargissement créé sur la goupille à enfoncer (32, 32a, 32b) qui entre en contact avec un rétrécissement prévu sur la douille (26).

3. Outil à enfoncer (10) selon l'une des revendications 1 ou 2, **caractérisé en ce que** la goupille à enfoncer (32, 32b) pouvant être reliée au logement du marteau perforateur comporte à l'extérieur de la douille (26) un élargissement (34), de préférence un épaississement radial, qui est conçu pour limiter le mouvement axial maximal de cette goupille à enfoncer (32, 32b) qui entre en contact avec un rétrécissement prévu sur l'extrémité arrière de la douille (26) - vue dans le sens de l'enfoncement (22).

4. Outil à enfoncer (10) selon la revendication 3, **caractérisé en ce que** le rétrécissement est créé par un moyen de retenue qui peut être relié, et de préférence vissé, sur l'extrémité arrière de la douille (26) - vue dans le sens de l'enfoncement, de préférence sous la forme d'une fermeture (36) qui comporte un alésage axial par lequel on peut faire passer la partie installée de la goupille à enfoncer (32, 32b) - vue dans le sens du siège (22) - devant l'élargissement (34).

5. Outil à enfoncer (10) selon l'une des revendications 1 à 4, **caractérisé en ce que** la goupille à enfoncer (32, 32b) qui peut être reliée au logement du marteau perforateur présente, de préférence sur l'extrémité avant - vue dans le sens de l'enfoncement (22) - un élargissement (38), en particulier un épaississement radial ou un pied cylindrique.

6. Outil à enfoncer (10) selon la revendication 5, **caractérisé en ce que** l'élargissement (38) est configuré en tant qu'élément séparé qui peut être relié à - et de préférence vissé sur - la partie restante, en particulier à la tige (40) de la goupille à enfoncer (32, 32b) qui peut être reliée au logement du marteau perforateur.

7. Outil à enfoncer (10) selon l'une des revendications 1 à 6, **caractérisé en ce que** la première goupille à enfoncer (32a) comporte, à l'intérieur de la goupille, de préférence sur son extrémité arrière - vue dans le sens de l'enfoncement (22) - un élargissement (42), en particulier un épaississement radial ou une tête cylindrique, qui entre en contact avec un rétrécissement conçu pour la limitation du mouvement axial maximal de cette goupille à enfoncer (32a) sur l'extrémité avant - vu dans le sens de l'enfoncement (22) de la douille (26).

8. Outil à enfoncer (10) selon l'une des revendications 1 à 7, **caractérisé en ce qu'**un ou le rétrécissement prévu sur l'extrémité avant - vue dans le sens de l'enfoncement (22) - de la douille (26) est configuré en tant que saillie orientée vers l'intérieur (40) dans la douille (26) qui est placée de préférence sur la circonférence radiale ou qui présente une ouverture axiale, par laquelle on peut faire passer la partie aménagée à l'avant - vu dans le sens du siège (22) - de la goupille à enfoncer (32, 32a) ou à l'avant de l'élargissement (38, 42).

9. Outil à enfoncer (10) selon l'une des revendications 1 à 8, **caractérisé en ce que** le moyen de montage (30} est configuré en tant que collet radial qui entoure l'extérieur de la douille (26), qui a un diamètre extérieur plus grand que l'alésage (12) ou qui peut être posé par son côté inférieur sur le support d'ancrage (14) ou sur le bord supérieur de l'alésage (12).

10. Outil à enfoncer (10} selon l'une des revendications 1 à 9, **caractérisé en ce que** l'élément d'accouplement est un élément intermédiaire disposé entre la douille (26) et une goupille à enfoncer (32) qui peut être reliée au logement du marteau perforateur, de préférence une goupille d'accouplement (44) disposée à l'intérieur de la douille (26), qui est en liaison active, de préférence permanente, avec la douille (26) pour la transmission du couple de rotation, ou qui est configuré de telle façon qu'il agit en interaction avec la goupille à enfoncer (32, 32b) reliée et tournant à gauche lors de la rétraction du marteau perforateur avec une configuration correspondante avec le logement du marteau perforateur, si bien que le couple de rotation est transmis par cette goupille à enfoncer (32, 32 b) vers l'élément intermédiaire, ou dans un deuxième temps vers la douille (26).

11. Outil à enfoncer (10) selon l'une des revendications 1 à 10, **caractérisé en ce que** l'élément d'accouplement peut être positionné dans la douille (26} en une saillie orientée vers l'intérieur, de préférence en position radiale (46) ou qui peut être fixé par au moins un moyen de retenue (36), au moins pour empêcher un décalage axial.

12. Outil à enfoncer (10) selon l'une des revendications 1 à 11, **caractérisé en ce que** l'élément d'accouplement ou la douille (26) agit par crabotage, de préférence par un système à rainure et languette se déplaçant dans le sens axial, de telle sorte qu'un couple de rotation peut être transmis de l'élément d'accouplement à la douille (26).

13. Outil à enfoncer (10) selon l'une des revendications 1 à 12, **caractérisé en ce que** l'élément d'accouplement ou la goupille d'accouplement (44) comporte à l'extrémité avant - vue dans le sens de l'enfoncement (22) - une saillie semi-circulaire (48) qui agit en interaction avec une saillie semi-circulaire (50) correspondante avec la goupille à enfoncer (32, 32b) pouvant être reliée au logement du marteau perforateur, sachant que ces saillies semi-circulaires (48, 50) sont configurées de telle façon qu'elles agissent en interaction avec des goupilles à enfoncer (32, 32b) munie d'une saillie semi-circulaire (50) uniquement lors de la rétraction du marteau perforateur ou d'une rotation vers la gauche de la goupille à enfoncer (32, 32 b), et que le couple de rotation est transmis par la goupille à enfoncer (32, 32 b) à l'élément d'accouplement.

14. Outil à enfoncer (10) selon l'une des revendications 1 à 13, **caractérisé en ce que** l'élément de fixation (12) est une ancre d'expansion, ou de préférence un dispositif d'ancrage à contre-dépouille, ou de manière plus préférable un dispositif d'ancrage à contre-dépouille auto-coupant.

15. Procédé de mise en place d'un élément de fixation (16) pouvant être ancré par le biais d'un marteau perforateur ou similaire ou par le biais d'un outil à enfoncer (10) selon l'une des revendications 1 à 14 dans un alésage (12) d'un support d'ancrage (14) par frappe, sachant que l'élément de fixation (16) comprend une goupille d'expansion (18) ainsi qu'un corps d'expansion (20) qui est disposé à l'intérieur, ou sur lequel l'élément de fixation (16) présente dans sa zone arrière - vue dans le sens de l'enfoncement (22) - un filet (24), de préférence un filet intérieur, selon les phases de procédé suivantes :
a) Vissage de l'élément de fixation (16) avec la douille (26), qui comporte dans sa zone frontale - vue dans le sens de l'enfoncement (22) - un filet (28) adapté au filet (24) de l'élément de fixation (16), de préférence un filet extérieur,
b) Liaison de l'extrémité extérieure - vue dans le sens de l'enfoncement (22) - ou à l'extérieur de la goupille de la goupille à enfoncer (32, 32b) avec le logement du marteau perforateur,
c) Insertion de l'élément de fixation (16) vissé dans l'alésage (12) du support d'ancrage jusqu'à ce que le moyen de montage (30) de la douille (26) s'appuie sur le support d'ancrage (14), de sorte que l'élément de fixation (16) est placé sur la position prescrite à l'intérieur de l'alésage (12),
d) Poussée vers l'avant du marteau perforateur, avec une activation simultanée de la fonction de frappe du marteau perforateur, ce qui fait que les impulsions de frappe sont transmises en fin de compte par les goupille à enfoncer (32, 32b, 32a) comportant un élément d'accouplement en plusieurs parties décalé sur le plan axial dans le sens de l'enfoncement vers le corps d'expansion (20), si bien que le corps d'expansion (20) est poussé vers l'avant par l'extrémité avant - vue dans le sens de l'enfoncement (22) - de la goupille à enfoncer (32, 32a) dans le sens de l'enfoncement (22), dont plus profondément dans la goupille d'expansion (18), de telle sorte que leurs languettes d'écartement (52) sont écartées pour l'ancrage dans le support d'ancrage (14)
e) Rétraction du marteau perforateur dès que la poussée vers l'avant du marteau perforateur n'est plus possible en raison du moyen de limitation prévu, de sorte que le sens de rotation de la goupille à enfoncer (32, 32b) reliée au logement du marteau perforateur est commuté vers la gauche sur le marteau perforateur, si bien que le couple de rotation de la goupille à enfoncer (32, 32b) qui tourne alors vers la gauche est transmis à la douille (26) lors de la rétraction du marteau perforateur, afin que la liaison par vis entre l'outil à enfoncer (10) ou l'élément de fixation (16) enfoncé ou ancré soit supprimée.

16. Procédé selon la revendication 15, **caractérisé en ce que** l'élément de fixation (16), de préférence un dispositif d'ancrage à contre-dépouille, est ancré à proximité de la surface, de telle sorte que l'extrémité arrière - vue dans le sens de l'enfoncement (22) - de la goupille d'expansion (18) s'arrête grosso modo sur le bord supérieur (54) de l'alésage (12).

17. Procédé selon la revendication 15 ou 16, **caractérisé en ce que** l'élément de fixation (16) ancré est disponible après l'enlèvement ou le dévissage de l'outil à enfoncer (10) pour une utilisation ultérieure, de préférence pour la fixation de pièces, sachant que des moyens de fixation correspondants, de préférence pour la fixation des éléments, sont vissés dans l'élément de fixation (16) ou dans la goupille d'expansion (18).

18. Procédé selon l'une des revendications 15 à 17, **caractérisé en ce que** l'outil à enfoncer (10) relié au marteau perforateur ou similaire après l'enlèvement de l'élément de fixation (16) enfoncé de force est muni d'un nouvel élément de fixation (16), si bien qu'un nouveau cycle peut commencer pour la mise en place de l'élément de fixation (16).

19. Procédé d'assemblage d'un outil à enfoncer (10), selon l'une des revendications 1 à 14,
comprenant les étapes de procédé suivantes :
a) Mise à disposition d'une première goupille à enfoncer (32a) qui dispose sur son extrémité arrière - vue dans le sens de l'enfoncement (22) - d'un élargissement (42),
b) Introduction de la première goupille à enfoncer (32a) avec sa partie placée devant - vu dans le sens de l'enfoncement - de l'élargissement (42) vers l'avant dans l'extrémité arrière - vue dans le sens de l'enfoncement - d'une douille (26), si bien que l'élargissement (42) de cette goupille à enfoncer (32a) sur un rétrécissement prévue dans la zone frontale - vue dans le sens de l'enfoncement (22) - de la douille (26) entre en contact avec un alésage axial par lequel la partie placée avant l'élargissement (42) - vue dans le sens du siège (22) - de la goupille à enfoncer (32a) est extraite au moins partiellement de la douille (26),
c) Mise à disposition d'une deuxième goupille à enfoncer (32b), dont l'extrémité arrière - vue dans le sens de l'enfoncement (22) - est configurée de telle façon qu'elle peut être logée par le logement d'un marteau perforateur ou similaire, étant donné que la deuxième goupille à enfoncer (32b) comporte en outre un élargissement (34) qui est placé à l'extérieur de la douille (26) après l'assemblage de l'outil à enfoncer (10),
d) Mise à disposition d'un dispositif de retenue (36) pouvant être relié à l'extrémité arrière - vue dans le sens de l'enfoncement - de la douille (26), qui comporte un alésage axial,
e) Glissement en place du moyen de retenue (36) sur la deuxième goupille à enfoncer (32b) à partir du côté avant - vu dans le sens de l'enfoncement - de la deuxième goupille à enfoncer, de sorte qu'on fait passer la partie frontale installée de la goupille à enfoncer (32b) - vue dans le sens de l'enfoncement (22) - avant l'élargissement (34) par l'alésage axial du moyen de retenue ou que le moyen de retenue peut être poussé en place au maximum jusqu'à l'élargissement,
f) Mise à disposition d'une goupille d'accouplement (44), qui est disposée après l'assemblage de l'outil à enfoncer (10) à l'intérieur de la douille (26), ou en l'occurrence entre la douille (26) ou la deuxième goupille à enfoncer (32) qui peut être reliée au logement du marteau perforateur,
g) Glissement en place de la goupille d'accouplement (44) sur la deuxième goupille à enfoncer à partir du côté avant - vu dans le sens de l'enfoncement - de la deuxième goupille à enfoncer, si bien qu'on fait passer la partie de goupille à enfoncer (32b) placée à l'avant - vu dans le sens de l'enfoncement (22) - de l'élargissement (34) par la goupille d'accouplement (44), ou que la goupille d'accouplement (44) peut être poussée en place au maximum jusqu'au moyen de retenue,
h) Liaison, de préférence vissage, d'un élargissement (38) sous la forme d'un pied cylindrique avec l'extrémité avant - vue dans le sens de l'enfoncement (22) - de la deuxième goupille à enfoncer (32b),
i) Assemblage de la goupille munie de la première goupille à enfoncer avec la deuxième goupille à enfoncer, qui comporte le moyen de retenue ou la goupille d'accouplement, de telle sorte que la deuxième goupille à enfoncer avec son extrémité avant - vue dans le sens de l'enfoncement - est inséré vers l'avant dans la douille (26) jusqu'à ce que la goupille d'accouplement soit positionnée sur une saillie (46) orientée vers l'intérieur de la douille (26) et placée sur la périphérie radiale, ou reliée par le moyen de retenue (36) avec le douille (26), afin de fixer la goupille d'accouplement contre un décalage axial.
